(19) Europäisches Patentamt
European Patent Office
Office européen des brevets

(11) EP 1 103 138 B1

(12) FASCICULE DE BREVET EUROPEEN

(45) Date de publication et mention de la délivrance du brevet:
**06.08.2008 Bulletin 2008/32**

(21) Numéro de dépôt: **99936696.6**

(22) Date de dépôt: **05.08.1999**

(51) Int Cl.:
***H04M 9/08*** *(2006.01)*

(86) Numéro de dépôt international:
**PCT/FR1999/001941**

(87) Numéro de publication internationale:
**WO 2000/008836 (17.02.2000 Gazette 2000/07)**

# (54) DISPOSITIF DE TRAITEMENT NUMERIQUE A FILTRAGE FREQUENTIEL ET A COMPLEXITE DE CALCUL REDUITE

DIGITALE SIGNALVERARBEITUNG MIT FREQUENZFILTERUNG UND MIT VERMINDERUNG DER RECHENKOMPLEXITÄT

DEVICE FOR DIGITAL PROCESSING WITH FREQUENCY FILTERING AND REDUCED COMPUTATION COMPLEXITY

(84) Etats contractants désignés:
**DE ES GB IT NL**

(30) Priorité: **06.08.1998 FR 9810124**

(43) Date de publication de la demande:
**30.05.2001 Bulletin 2001/22**

(73) Titulaire: **FRANCE TELECOM**
**75015 Paris (FR)**

(72) Inventeurs:
- **GILLOIRE, André**
  **F-22300 Lannion (FR)**
- **TAGER, Wolfgang**
  **F-22300 Lannion (FR)**
- **TURBIN, Valérie**
  **F-22300 Lannion (FR)**

(74) Mandataire: **Joly, Jean-Jacques et al**
**Cabinet Beau de Loménie**
**158, rue de l'Université**
**75340 Paris Cédex 07 (FR)**

(56) Documents cités:
**EP-A- 0 454 242** **US-A- 5 768 165**

- **TAPIO SARAMAKI: "A CLASS OF WINDOW FUNCTIONS WITH NEARLY MINIMUM SIDELOBE ENERGY FOR DESIGNING FIR FILTERS" PROCEEDINGS OF THE INTERNATIONAL SYMPOSIUM ON CIRCUITS AND SYSTEMS, PORTLAND, MAY 8 - 11, 1989, vol. 1, no. SYMP. 22, 8 mai 1989 (1989-05-08), pages 359-362, XP000131258 INSTITUTE OF ELECTRICAL AND ELECTRONICS ENGINEERS**
- **CARLSON A. BRUCE: "COMMUNIATION SYSTEMS" 1986 , MCGRAW-HILL XP002099770 page 33, ligne 24, alinéas 2.2-1 -page 34, ligne 13 figures 2.2-1,2.2-2 page 42, ligne 31, alinéa 2.3 -page 46, ligne 35; figures 2.3-1,2.3-2 figures 2.3-3**
- **CROCHIERE R.E., RABINER L.R.: "Multirate Digital Signal Processing" 1983 , PRENTICE-HALL , US, ENGLEWOOD CLIFFS XP002099771 page 175, ligne 13, alinéa 4.3.11 -page 177, ligne 1 figure 4.21**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 1 103 138 B1

## Description

L'invention concerne les filtres numériques réalisant sur une fonction fréquentielle un traitement correspondant à l'annulation d'une partie du signal temporel obtenu par transformée inverse d'une telle fonction fréquentielle.

Une telle fonction fréquentielle peut être la réponse fréquentielle, c'est à dire la fonction de transfert d'un filtre, par exemple d'un filtre adaptatif, ou encore la transformée de Fourier d'un signal temporel.

De manière connue, un filtre numérique réalise des opérations sur des données qui peuvent être soit des données directement disponibles à l'entrée ou à la sortie du filtre, soit des données obtenues par une transformation telle que la transformation de Fourier, la transformation de Hartley, ou d'autres transformations.

L'utilisation de ces transformations, fréquemment réalisées à l'aide d'algorithmes rapides, permet de réduire considérablement le nombre d'opérations arithmétiques à réaliser pour traiter les données.

Les dispositifs et traitement numériques sont souvent prévus pour réaliser des opérations de convolution ou de corrélation. De nombreuses applications à base de traitement adaptatif du signal nécessitent ainsi des opérations de convolution (filtrage) et de corrélation, qui sont réalisées sur des vecteurs dont les données ou les coefficients sont variables, ces vecteurs étant souvent de grande taille (plusieurs centaines à plusieurs milliers de coefficients).

Dans le domaine des télécommunications, l'annulation d'écho acoustique et électrique, le débruitage de la parole, l'égalisation de canal de transmission, et dans d'autres domaines, des applications comme la commande adaptative, font appel à de telles techniques de traitement adaptatif du signal.

Le calcul exact de la convolution ou de la corrélation nécessite fréquemment l'application d'une contrainte sur la taille du vecteur temporel représentant le filtre ou les données, c'est-à-dire une limitation du nombre d'échantillons non nuls de la transformée inverse du vecteur fréquentiel à utiliser, que ce vecteur fréquentiel soit la réponse fréquentielle d'un filtre ou la transformée d'un signal temporel à traiter.

Cette contrainte est classiquement réalisée par application sur les données du domaine transformé, c'est-à-dire du domaine fréquentiel, d'une transformation inverse, puis application d'un fenêtrage annulant certaines composantes du vecteur temporel, et enfin application de la transformation directe pour obtenir le résultat exact dans le domaine transformé.

Lorsqu'on souhaite réaliser un filtre optimal à appliquer à un signal affecté d'une perturbation, pouvant être par exemple un bruit ou un écho, il est usuel de calculer la fonction de transfert du filtre optimal à partir du signal affecté, sur un nombre de points fréquentiels de la transformée du signal qui est inférieur au nombre de points total du signal.

De plus, le vecteur fréquentiel du filtre étant court, le calcul exact du signal de sortie du filtre, qui doit être réalisé par convolution linéaire, suppose souvent que la réponse impulsionnelle du filtre optimal soit prolongée par des zéros.

Cette opération de calcul d'un filtre à réponse fréquentielle longue à partir d'un filtre à réponse fréquentielle courte, en prolongeant la réponse impulsionnelle du filtre par des zéros, est habituellement effectuée, là encore, par passage intermédiaire dans le domaine temps, prolongement du vecteur réponse impulsionnelle du filtre par des zéros, et transformation directe pour obtenir le résultat exact dans le domaine transformé.

On comprend que ce passage dans le domaine temps pour appliquer une contrainte d'annulation, ou encore pour prolonger la réponse impulsionnelle d'un filtre optimal par des zéros, est coûteux en calculs puisqu'il nécessite deux transformations (une directe et une inverse).

On va maintenant exposer les bases théoriques montrant des raisons typiques pour lesquelles de telles contraintes sont souvent nécessaires :

L'utilité de la transformation de Fourier (TF) pour effectuer un filtrage ou pour calculer une corrélation découle du fait que les opérations de convolution et de corrélation se traduisent par des simples multiplications dans le domaine transformé. Nous décrivons ici uniquement le cas de la convolution, le cas de la corrélation est complètement analogue.

Soit h(n) un filtre de longueur $L_h$ et x(n) un signal à l'entrée de ce filtre. Alors on obtient à la sortie du filtre

$$y(n) = x(n) * h(n) = \sum_{i=0}^{L_h - 1} h(i)x(n-i) = TFI\left[TF\left[x(n)\right] \cdot TF\left[h(n)\right]\right]$$

où TF[..] et TFI[..] désignent la transformation de Fourier directe et inverse et désigne l'opération de convolution. Dans la pratique, deux difficultés empêchent une utilisation directe de cette équation :

- pour calculer la transformation de Fourier du signal, on doit connaître le signal entièrement, c'est-à-dire tous les échantillons du passé et du futur, ce qui n'est pas réalisable ;
- dans de nombreuses applications comme l'annulation d'écho ou le filtrage adaptatif, le filtre h(n) évolue dans le temps.

Pour résoudre ces problèmes, l'homme de l'art découpe le signal en blocs d'une longueur N et associe à chaque bloc b un filtre $h_b(n)$ de longueur $L_h$. Dans le cas général, ces blocs se chevauchent. Dans l'objectif de simplifier les notations, on suppose que les blocs sont juxtaposés, bien que ce ne soit pas une condition nécessaire.

Soit

$$x_b(n) = \begin{cases} x(n+bN)\ si\ 0 \le n \le N-1 \\ 0\ ailleurs \end{cases}$$

Le signal de sortie y(n) est donné par

$$y(n) = \sum_{b=-\infty}^{\infty} y_b(n-bN) \quad \text{avec} \qquad y_b(n)=x_b(n)*h_b(n)$$

Pour calculer la transformation de Fourier directe et inverse, on utilise une méthode rapide connue sous le nom « Transformation de Fourier rapide » ($TFR_T$ pour une transformation directe sur T points, $TFRI_T$ pour la transformation inverse sur T points).

Le signal $y_b(n)$ est nul pour n<0 et $n \ge T=N+L_h-1$, ce qui implique que le nombre minimal de points pour calculer les transformations égale T. En effet, on peut prouver que pour $0 \le n \le T-1$ on obtient :

$$y_b(n) = TFRI_T\left[TFR_T\left[x_b(n)\right] \cdot TFR_T\left[h_b(n)\right]\right] = TFRI_T\left[X_{b,T}(k) \cdot H_{b,T}(k)\right]$$

Dans,certains cas, on n'a pas besoin de toutes les valeurs de $y_b$, mais uniquement de $L_y$ points consécutifs. Dans ce cas, la taille des TFR doit satisfaire

$$T \ge 0.5*(N+L_h+L_y-1)$$

Cette contrainte est appelée contrainte de convolution linéaire.

Dans la pratique, on rencontre souvent le problème suivant :

On s'est fixé N (la taille d'un bloc de données), T (la taille de la TFR) et $L_y$ (longueur utile du résultat). On a calculé X(k) par TFR et le filtre H(k) par une méthode arbitraire directement dans le domaine transformé sur T points. On dispose donc de deux facteurs de la multiplication, mais la condition nécessaire pour que le filtrage soit correct :

$$L_h \le 2T-N-L_y+1$$

n'est pas remplie. La question est comment obtenir un filtre $\tilde{H}(k)$ dans le domaine transformé qui soit une approximation de $H_{b,T}(k)$, mais qui remplisse cette contrainte ? Dans la pratique connue, on calcule la transformée inverse de H, on annule une partie de ce signal et on recalcule un transformée directe de cette fonction prolongée pour remplacer H. On rencontre également très souvent un autre problème, qui est le suivant :

On s'est fixé N (la taille d'un bloc de données), T (la taille de la TFR) et $L_y$ (longueur utile du résultat). On a calculé X(k) par TFR et le filtre H(k) par une méthode arbitraire directement dans le domaine transformé sur $L=T/D \le 2T-N-L_y+1$ points. La question est comment obtenir un filtre $\tilde{H}(k)$ dans le domaine transformé sur T points au lieu de L, qui soit une interpolation de H(k) et qui remplisse la contrainte $L_h \le 2T-N-L_y+1$ ?

Dans la pratique connue, on calcule la transformée inverse de H, on la prolonge par des zéros, et on recalcule une nouvelle fonction H à partir de cette transformée inverse tronquée, par une transformée directe.

On a proposé de supprimer ce passage par deux transformations successives, coûteux en calculs, dans le cas d'une contrainte d'annulation, au moyen d'un traitement (filtrage) directement dans le domaine transformé sur les données du domaine fréquentiel.

Dans le domaine de l'annulation de l'écho acoustique, et plus précisément dans le domaine des filtres adaptatif par blocs avec utilisation de la transformée de Fourier, appelés fréquemment « filtres adaptatifs dans le domaine fréquences » (« Frequency Domain Adaptive Filter », noté FDAF ), Clark et Coll. [1] décrivent un formalisme général où apparaît la nécessité d'appliquer une contrainte sur la longueur de la réponse impulsionnelle du filtre adaptatif pour obtenir un algorithme exact, et proposent de mettre en application une convolution avec la réponse fréquentielle du filtre, qui soit équivalente à une multiplication par une fenêtre dans le domaine temporel. Le nombre de coefficients de la convolution proposée est très élevé, maintenant une grande complexité de calcul.

Sommen et Coll. [5] décrivent une autre variante de FDAF où la contrainte temporelle est réalisée par convolution dans le domaine fréquentiel : les auteurs proposent d'appliquer sur les données fréquentielles représentant la réponse du filtre un lissage particulier à 3 coefficients équivalent à une pondération de la réponse temporelle par une fenêtre en cosinus.

Le maximum de cette fenêtre est supposé correspondre aux coefficients dominants de cette réponse, ce qui est une hypothèse très restrictive. La justification donnée par les auteurs à leur méthode est d'ailleurs la réduction du bruit d'adaptation liée à la pondération des coefficients, plutôt que la recherche d'une approximation de la solution exacte d'application d'une contrainte.

On citera également à titre de références, Mansour et Coll. [2], qui ont proposé une version simplifiée du FDAF sans application de contrainte, ce qui se traduit par une réduction importante de complexité, mais aussi par des performances inférieures à celles des algorithmes avec contraintes.

Prado et Coll. [3] ont également décrit une version généralisée du FDAF appelée GMDF$\alpha$ (« Generalized Multi-Delay Filter » avec facteur de suréchantillonnage $\alpha$), qui permet de traiter des réponses impulsionnelles longues avec des blocs de données plus courts en segmentant la réponse impulsionnelle en petits blocs, ce qui réduit le retard de traitement dans l'algorithme. Cet algorithme utilise la contrainte citée précédemment.

Mc Laughlin et Coll. [4] décrivent une forme modifiée de l'algorithme FDAF reprenant certains aspects du GMDF, notamment la segmentation de la réponse impulsionnelle en petits blocs, et proposent une technique d'application de la contrainte sur les différents blocs évoluant au cours du temps suivant un schéma bien défini (« scheduler »), qui permet de limiter la complexité tout en préservant partiellement le bénéfice de la contrainte.

Le but principal de l'invention est de proposer un filtre numérique effectuant, sur un vecteur fréquentiel, une convolution qui équivaut à un fenêtrage du signal temporel correspondant à ce vecteur fréquentiel, qui produise une précision de calcul satisfaisante tout en ne nécessitant qu'une quantité de calculs particulièrement faible.

Ce but est atteint selon l'invention grâce à un dispositif de traitement de données numériques comportant un module réalisant sur un vecteur de données du domaine fréquentiel Z(k), où k varie de 0 à N-1 ; une convolution avec une fonction U, convolution qui correspond à une annulation dans le domaine temporel d'échantillons de la transformée inverse de Z(k), caractérisé en ce que la fonction U est de la forme : $U(k) = \operatorname{sinc}\left(\frac{k-k_0}{2}\right) e^{-j\alpha\left(\frac{\pi(k-k_0)}{2}\right)} . P(k)$ ,

où $k_0$ est un entier constant et P(k) est une fenêtre de pondération symétrique autour de $k_0$ et $\alpha$ est une constante.

Un tel filtre présente un nombre de coefficients qui peut être ajusté suivant l'approximation désirée du résultat, ce nombre pouvant être très faible. Un tel filtre ne nécessite, pour être mis en oeuvre, qu'un nombre d'opérations arithmétiques considérablement réduit par rapport aux solutions classiques.

D'autres caractéristiques, buts et avantages de l'invention apparaîtront à la lecture de la description qui va suivre, faite en référence aux figures annexées sur lesquelles :

- les figures 1 à 3 représentent respectivement la réponse fréquentielle en module, la réponse fréquentielle en phase, et la réponse impulsionnelle d'un filtre,
- les figures 4 à 6 représentent respectivement la réponse fréquentielle en module, la réponse fréquentielle en phase, et la réponse impulsionnelle du filtre des figures 1 à 3 sur lequel une même contrainte d'annulation a été appliquée à l'aide d'un dispositif classique à deux transformées,
- les figures 7 à 9 représentent respectivement la réponse fréquentielle en module, la réponse fréquentielle en phase, et la réponse impulsionnelle du filtre des figures 1 à 3 sur lequel une contrainte d'annulation a été appliquée avec un dispositif selon l'invention,
- les figures 10 à 12 représentent respectivement en module fréquentiel, en phase fréquentielle, et en réponse impulsionnelle l'erreur obtenue avec le dispositif selon l'invention par rapport au dispositif classique,
- la figure 13 représente l'amplitude de la fonction de transfert d'un filtre et quelques points interpolés avec un dispositif selon l'invention,
- la figure 14 représente la réponse impulsionnelle du filtre de la figure 13 non interpolé, prolongée par des zéros,
- la figure 15 représente la réponse impulsionnelle du filtre de la figure 13 interpolé,
- la figure 16 représente l'erreur en réponse impulsionnelle entre le filtre de la figure 14 prolongé par des zéros dans le domaine temps et le filtre interpolé de la figure 13,

- les figures 17 à 21 représentent cinq variantes de dispositifs à filtre adaptatif conformes à l'invention,
- la figure 22 représente schématiquement un annuleur d'écho de type connu,
- la figure 23 représente de manière fonctionnelle détaillée un annuleur d'écho connu,
- la figure 24 représente de manière fonctionnelle détaillée un annuleur d'écho selon l'invention,
- la figure 25 représente un dispositif à annulation d'écho et de bruit,
- la figure 26 représente un dispositif ayant le même rôle que celui de la figure 25, et réalisé selon l'invention.

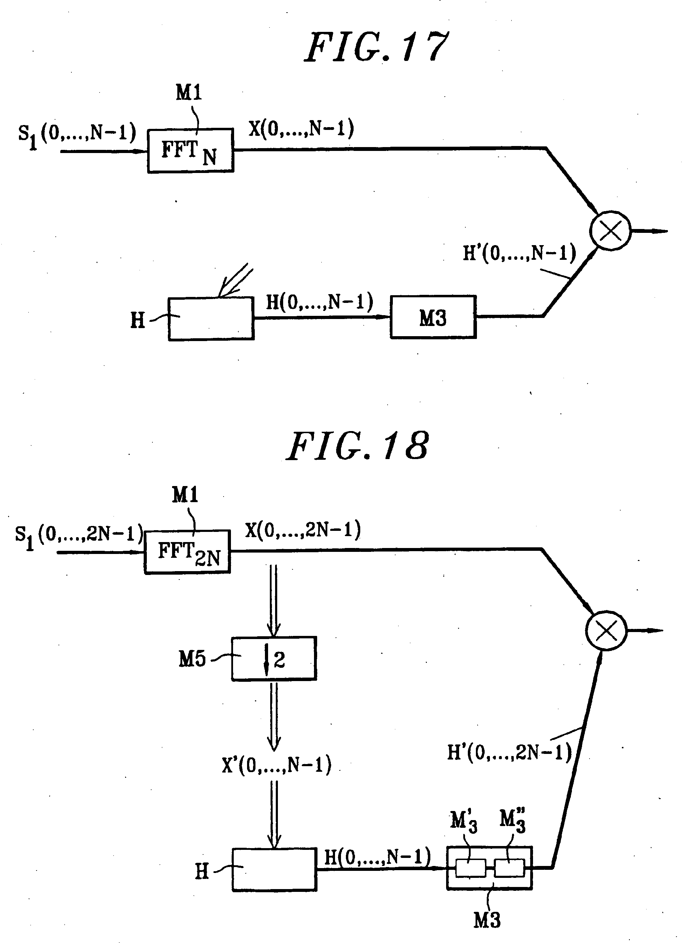

On décrira maintenant un premier dispositif de filtration d'un son conforme à l'invention en référence à la figure 17.

Ce dispositif reçoit en entrée un signal temporel discret constitué de plusieurs blocs consistant chacun en 1024 échantillons dans l'exemple non limitatif décrit ici. Ce signal temporel est un signal sonore ou acoustique, tel qu'un son représentatif de la parole d'un utilisateur parlant dans un micro.

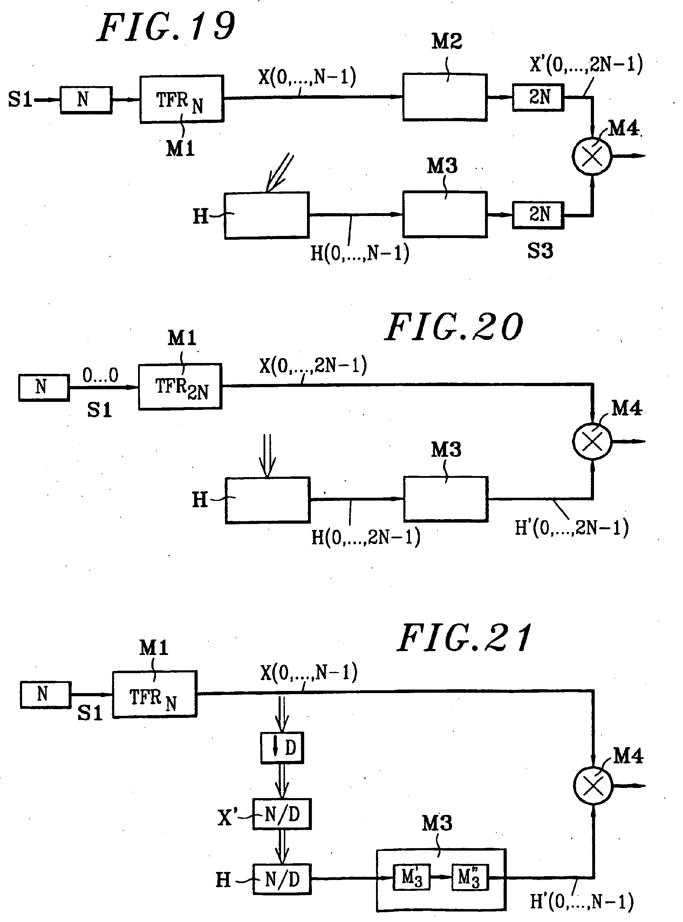

Sur la figure 20, un de ces blocs temporels est noté S1(0,...,N-1), où N est égal à 1024.

Ce signal S1 est reçu par un premier module M1 qui réalise sur ce signal une transformée de Fourier discrète rapide d'ordre N, notée $FFT_N$, pour fournir un signal fréquentiel de N échantillons X(0,...,N-1). Ce signal fréquentiel est donc lui aussi un signal représentatif d'un son. Ce signal est donc ici un signal acoustique.

A partir de ce vecteur fréquentiel X de taille N, un filtre adaptatif H calcule un vecteur H(0,... ,N-1) dont les N coefficients dépendent du vecteur X. Chaque composante du vecteur H est calculée grâce à un algorithme faisant intervenir des composantes du vecteur X. Cette dépendance est indiquée sur la figure 17 par une double flèche.

De manière connue, un tel filtre adaptatif H est destiné à être appliqué au signal X à partir duquel il s'adapte, par exemple pour annuler un écho détecté sur ce signal X.

Toutefois, le filtre H à N coefficients ne peut pas être appliqué à X directement tel qu'il est obtenu en sortie de H. Comme expliqué précédemment, le vecteur H doit être traité de façon à ce que sa réponse impulsionnelle présente un nombre de coefficients non nul qui soit inférieur à une valeur N' qui est inférieure à N. En d'autres termes, le vecteur H doit répondre à une contrainte de convolution linéaire avant d'être convolué avec le vecteur X.

Pour obtenir un vecteur H' répondant à une telle contrainte à partir du vecteur H, il est connu de placer en sortie du filtre adaptatif H un ensemble de trois modules, l'un effectuant une transformée inverse de H dans le domaine temps, un deuxième module multipliant la réponse impulsionnelle du filtre H par une fenêtre rectangulaire qui garde inchangée une partie de la réponse impulsionnelle et annule une partie de queue de cette réponse impulsionnelle, et un troisième module effectuant une transformée directe pour obtenir la réponse fréquentielle du filtre H' correspondant à la réponse impulsionnelle tronquée.

Le dispositif de la figure 17 présente entre la sortie du filtre adaptatif H et un module de convolution avec le signal X, un module M3 réalisant sur le vecteur fréquentiel H(0,...,N-1) un traitement dans le domaine fréquentiel, sans passage par le domaine temporel, pour fournir un vecteur fréquentiel H' à N coefficients dont la réponse impulsionnelle n'a pour valeurs non nulles que ses N' premiers coefficients, ces N' premiers coefficients étant les mêmes que les N' premiers coefficients de la réponse impulsionnelle de H.

Pour effectuer un tel traitement, ce module M3 met en oeuvre une convolution de H(0,...,N-1) avec une fonction U(k) qui est donnée par $U(k)=\frac{1}{2}\operatorname{sinc}\left(-\frac{Lu-1}{4}+\frac{k}{2}\right).kaiser(k,\beta).e^{-j\pi\left(-\frac{Lu-1}{4}+\frac{k}{2}\right)}$ pour k allant de 0 à Lu-1, et U(k) étant nul en dehors des valeurs de k allant de 0 à Lu-1. La fonction sinc de la formule ci dessus est donnée par :

$\operatorname{sinc}(x)=\frac{\sin(\pi.x)}{\pi.x}$. La fonction sinc prend la valeur 1 pour x=0.

Dans l'exemple particulier décrit ici, Lu est choisi égal à 7, de sorte que Lu-1 est pair, et de sorte que (Lu-1)/4 est un multiple de 1/2.

La fonction U(k) peut encore s'écrire $U(k)=\frac{1}{2}.\operatorname{sinc}\left(\frac{k-k_0}{2}\right).e^{-j\pi\left(\frac{k-k_0}{2}\right)}Kaiser(k,\beta)$.

Une telle fonction U(k) a pour transformée temporelle une fenêtre sensiblement rectangulaire, prenant pour valeur environ 1 pour k allant de 0 à 512, et pour valeur 0 pour k allant de 512 à 1024.

Les inventeurs sont arrivés à une telle forme de fonction en constatant que la fonction $\operatorname{sinc}\left(\frac{k}{2}\right)$ a pour transformée discrète inverse dans le domaine temporel, une, fonction prenant une valeur sensiblement constante et proche de 2 pour k compris entre 0 et N/4 ainsi que pour k compris entre 3N/4 et N, tandis qu'elle prend des valeurs proches de zéro pour k compris entre N/4 et 3N/4.

Pour obtenir une fonction fréquentielle U(k) correspondant à une fenêtre temporelle prenant sensiblement la valeur 1 pour k=0,...,N/2, et la valeur 0 pour k=N/2,...,N-1, les inventeurs ont utilisé la propriété selon laquelle une multiplication dans le domaine fréquentiel par une exponentielle complexe $e^{j2\pi\frac{kn_0}{N}}$, équivaut à un décalage de $n_0$ de la fonction temporelle correspondante, obtenue par transformée de Fourier inverse.

Dans le cas présent, les inventeurs ont utilisé la valeur $n_0/N = 1/4$, produisant un décalage circulaire d'un quart de fenêtre de la transformée discrète inverse de la fonction $\sin c\left(\frac{k}{2}\right)$, permettant donc d'obtenir la fenêtre souhaitée. Cette fenêtre correspond donc à l'annulation d'une deuxième moitié du signal temporel, et à la conservation telle quelle de la première moitié du signal temporel. Plus généralement on pourra utiliser un décalage différent de celui d'un quart de fenêtre proposé ici. On utilise alors une fonction $U(k) = \sin c\left(\frac{k-k_0}{2}\right).e^{-j\pi\left(\frac{\alpha(k-k_0)}{2}\right)}.kaiser(k,\beta)$, où a est une constante choisie pour obtenir le décalage souhaité. Ainsi, une valeur de $\alpha$ égale à 2 correspond à une fenêtre temporelle qui est nulle sur le premier et le quatrième quart du support temporel, et égale à 1 sur une partie centrale du support, de longueur égal à la moitié de celle du support. L'invention ne se limite donc pas à une valeur de $\alpha$ égale à 1 comme on le décrit dans les présents exemples particuliers de réalisation. Un autre exemple préférentiel de réalisation de l'invention est celui où $\alpha$ = -1, correspondant à une annulation de la première partie de la fenêtre. L'homme de l'art adaptera la valeur de a selon la partie qu'il souhaite annuler, en tenant compte que le décalage se fait de manière circulaire.

Dans cette formule, la fonction U est multipliée par une fenêtre de pondération classique, ici la fenêtre de kaiser avec $\beta$=1,5.

La fenêtre de pondération a pour rôle connu en lui-même de réduire un pic d'amplitude d'erreur sur la fenêtre transformée d'un signal tronqué, ici du signal $U(k) = \sin c\left(\frac{k-k_0}{2}\right).e^{-j\pi\left(\frac{\alpha(k-k_0)}{2}\right)}$ tronqué sur l'intervalle $0 \leq k \leq (Lu-1)$.

De manière préférentielle, la fenêtre de pondération est une fenêtre symétrique par rapport à une valeur $k_0$ de k pour laquelle la fonction $U(k) = \sin c\left(\frac{k-k_0}{2}\right).e^{-j\pi\left(\frac{\alpha(k-k_0)}{2}\right)}$ présente son maximum en module (en valeur absolue). De cette façon, les coefficients du produit de $U(k) = \sin c\left(\frac{k-k_0}{2}\right).e^{-j\pi\left(\frac{\alpha(k-k_0)}{2}\right)}$ et de cette fenêtre de pondération présentent les mêmes propriétés que les coefficients de $U(k) = \sin c\left(\frac{k-k_0}{2}\right).e^{-j\pi\left(\frac{\alpha(k-k_0)}{2}\right)}$ qui seront décrites ci-après, et qui procurent des avantages importants en termes de quantité de calcul et de taille mémoire.

L'homme de l'art peut donc remplacer la fenêtre de kaiser ici proposée par toute autre fenêtre de pondération connue, telle qu'une fenêtre de Hanning.

Dans l'exemple de réalisation présent, avec Lu=7, on obtient pour les coefficients de U suivants :

| k | 0 | 1 | 2 | 3 | 4 | 5 | 6 |
|---|---|---|---|---|---|---|---|
| U(k) | j 0.0644 | 0 | j 0.3027 | .5 | j 0.3027 | 0 | -j 0.0644 |

On constate, que le filtre présente une symétrie hermitienne par rapport à la valeur $k_0$ de k pour laquelle

$$-\frac{Lu-1}{4}+\frac{k_0}{2}=0,$$ c'est à dire $$k_0=\frac{Lu-1}{2},$$ c'est-à-dire $k_0 = 3$.

Grâce à cette symétrie hermitienne en elle-même, seule la moitié des coefficients du filtre U sont à calculer. De plus, grâce à cette symétrie hermitienne en elle-même, l'opération de convolution avec U pourra être effectuée avec une réduction de la charge de calcul qui est proche de 50%, comme on le montrera par la suite.

On constate en outre que les coefficients du filtre sont alternativement réels purs et imaginaires purs. Cette propriété vient du fait que l'argument du facteur $e^{j\pi\left(\frac{k}{2}-\frac{Lu-1}{4}\right)}$ est une fonction linéaire variant par pas de $-j\frac{\pi}{2}$, et a pour valeur à k=0 un multiple de $j\frac{\pi}{2}$.

Cette propriété vient du fait que le filtre est un filtre demi-bande Toutefois, une symétrie hermitienne peut également être obtenue avec un autre filtre qu'un filtre demi-bande, par exemple un filtre correspondant à une fenêtre annulant un quart du signal temporel.

On constate encore qu'un coefficient sur deux du filtre U est nul, sauf le coefficient pour k=3. En effet, la fonction sinc(x) s'annule pour tout x entier sauf pour 0. Cette propriété découle également du fait que U est un filtre demi-bande. Ainsi, dans le cas des coefficients indiqués précédemment, un coefficient sur sept est nul.

Ces trois propriétés permettent donc une réduction importante de la charge de calcul.

La convolution de U(k) avec H(k) réalisée par le module M3 pour fournir le vecteur H' s'exprime sous la forme :

$$H'(k+3) = H(k).U(6)+ H(k+1).U(5) + H(k+2).U(4) + H(k+3).U(3)+ H(k+4).U(2) + H(k+5).U(1)+H(k+6).U(0)$$

On calcule donc un coefficient d'indice k' de H' en convoluant U et H de telle sorte que le coefficient de H de même indice k' est multiplié par la valeur de U qui est maximale en module. Les autres multiplications de cette convolution sont réalisées en augmentant l'indice de U lorsque l'indice de H est diminué, comme pour toute convolution.

En d'autres termes, la fonction H' est égale à la convolution de H avec une fonction de forme $$U(k)=\frac{1}{2}.\sin c\left(\frac{k-k_0}{2}\right).e^{-j\pi\left(\frac{k-k_0}{2}\right)},$$ où $k_0$ est nul.

Plus généralement, une fonction U de la forme $$U(k)=\frac{1}{2}\sin c\left(B+\frac{1}{2}+\frac{k}{2}\right).e^{-j\pi\left(B+\frac{1}{2}+\frac{k}{2}\right)}.P(k),$$ où la constante B est un entier choisi de manière arbitraire et où P est une fenêtre de pondération, peut être utilisée.

En effet, la constante B produit un décalage de la fonction U(k) qui sera facilement pris en compte par l'homme du métier dans le calcul de la convolution, en tenant compte du fait que pour obtenir le coefficient d'indice k' donné de H', la convolution doit être telle que le coefficient de H de même indice k' doit être multiplié par le coefficient de U de module maximal.

Le fait qu'une fonction F2 soit égale à une convolution entre F1 et $U_0$, signifie que :

$$F2(k)= F1(k).U_0(0) + F1(k-1).U_0(1) +F1(k+1).U_0(-1) + F1(k-2).U_0(2) + F1(k+2).U_0(-2) + \ldots$$

Dans le cas où U (k) = $U_0(k+B)$, on peut écrire :

$$F2(k) = F1(k).U(-B) + F1(k-1).U(-B+1) + F1(k+1).U(-B-1) + \ldots$$

Et donc $$F2(k+B) = F1(k+B).U(-B) + F1(k+B-1).U(-B+1) + F1(k+B+1).U(-B-1) + \ldots$$

Il est donc sans conséquence sur le résultat d'une convolution de décaler l'une des fonctions convoluées d'un nombre entier d'échantillons, si le signal obtenu par convolution est lui-même décalé de manière appropriée.
Le module M3 peut donc se décomposer en un premier ensemble réalisant les multiplications et les additions, et un second ensemble réalisant le décalage.
Dans le cas présent et conformément à l'invention, on effectue une convolution entre le signal fréquentiel d'entrée H et la fonction U de façon à ce que, dans le calcul de convolution donnant H' à l'indice k, H(k) est multipliée par la valeur atteinte par U lorsque le sinc de U est maximal, c'est à dire que H(k) est multipliée par U(k+A) où A est tel que l'argument du sinus cardinal est nul.
Dans cette convolution, H(k+1) est donc alors multipliée par U(k+A-1), H(k-1) par U(k+A+1), H(k+2) par U(k+A-2), H(k-2) par U(k+A+2), et plus généralement H(k+p) est multiplié par U(k+A-p).
Les inventeurs ont constaté qu'en réalisant une telle convolution avec une telle fonction U, on réalise l'application d'une contrainte d'annulation de la moitié du signal temporel correspondant à H, avec une précision très satisfaisante, et pour une quantité de calcul très faible, sans avoir à réaliser une transformée inverse dans le domaine temporel
Dans le cas du filtre U de l'exemple de réalisation de la figure 17, on a comme exposé précédemment,

$$U(1)=U(5)=0,\ U(0) = -U(6),\ U(1) = -U(5),\ \text{et}\ U(2) = -U(4).$$

Donc $H'(k+3)=U(0).(H(k+6)-H(k))+U(2)(H(k+4)-H(k+2))+U(3)(H(k+3))$, c'est à dire $H'(k+3)=U(0).A(k)+U(2)B(k)+U(3)(H(k+3))$ avec $A(k) = H(k+6)-H(k)$ et $B(k) = H(k+4)-H(k+2)$.

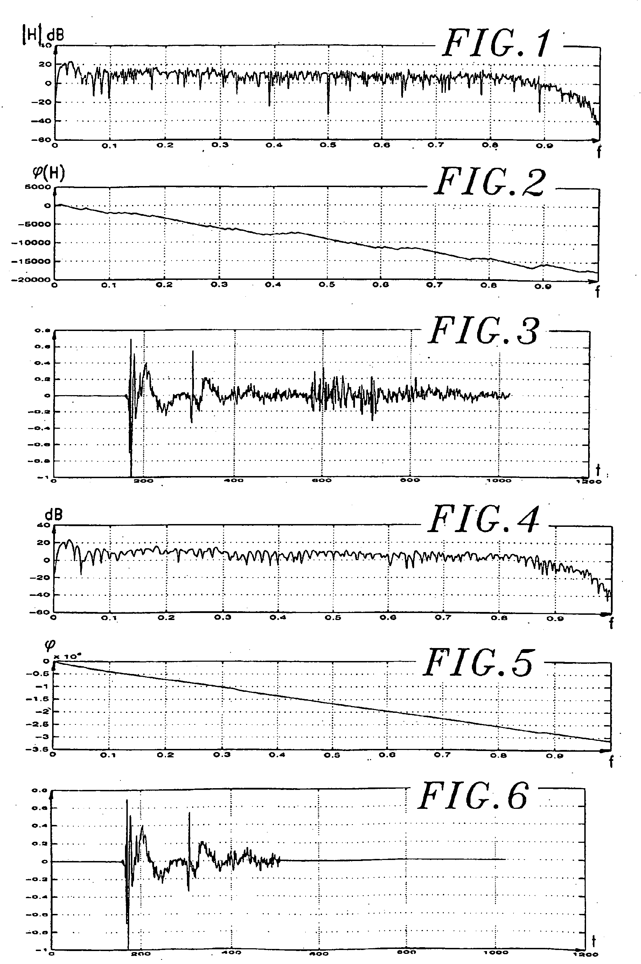

Ainsi, au lieu de 7 multiplications complexes et 6 additions complexes, c'est-à-dire 28 multiplications réelles et 26 additions réelles, on réalise la convolution avec 6 multiplications réelles et 8 additions réelles.
Dans le cas d'un dispositif différent de celui de la figure 17 mais présentant un module M3 similaire, si le signal H est obtenu par transformée d'un signal temporel réel, alors H présente une symétrie hermitienne pouvant elle aussi être mise à profit et permettant encore de diviser la charge de calcul par 2.
Les valeurs H(k) pour k<0 et k>N-1 peuvent être obtenues par un adressage modulo N (-1 correspond à N-1, -2 à N-2, etc...).
On a représenté sur les figures 1 et 2 le signal H(k) en amplitude et en phase sur l'ensemble de ses 1024 points, et sur la figure 3, la réponse impulsionnelle h(i) sur 1024 points, correspondant à H(k).

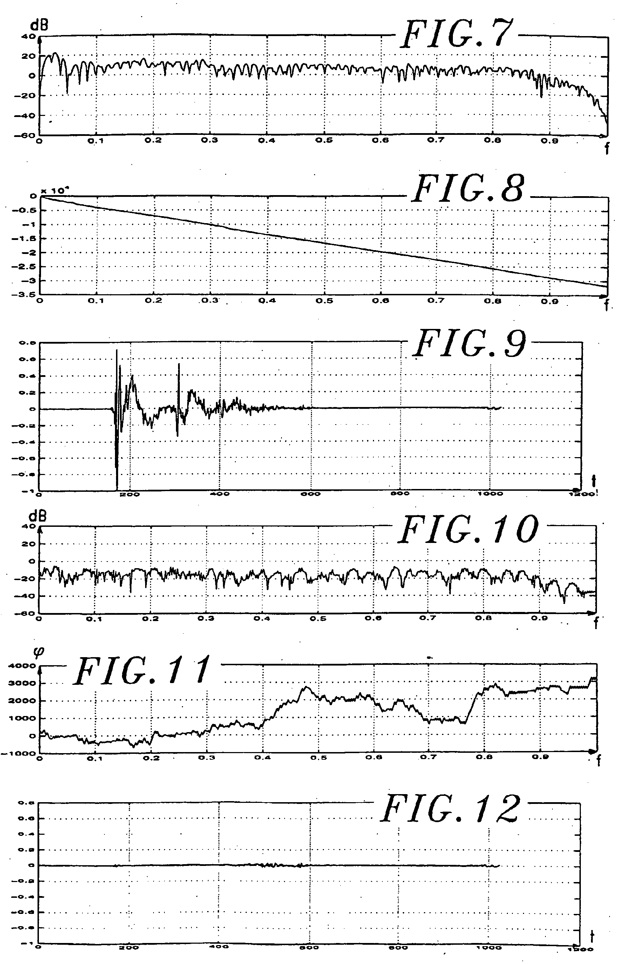

Les figures 7 et 8 représentent le signal fréquentiel H' obtenu après convolution de H et U, respectivement en amplitude et en phase. La figure 9 représente la réponse impulsionnelle h' correspondant à ce signal.
On constate que la réponse impulsionnelle h' est annulée sur les 512 derniers points et elle reste inchangée sur ses 512 premiers points.
On compare maintenant ces résultats obtenus avec le dispositif de l'invention, avec les résultats obtenus avec un dispositif classique mettant en oeuvre une transformée de Fourier inverse, une annulation de la deuxième portion de la réponse impulsionnelle, et une transformée de Fourier de ce signal temporel tronqué.
Les figures 4 et 5 représentent ainsi le signal fréquentiel obtenus après ces trois étapes de traitement classiques, respectivement en amplitude et en phase. La figure 12 représente la réponse impulsionnelle de ce signal.
On a représenté sur les figures 10 et 11 l'erreur respectivement en amplitude et en phase entre les signaux fréquentiels obtenus avec ce dispositif classique et les signaux fréquentiels obtenus avec le dispositif selon l'invention.
La figure 12 représente l'erreur sur la réponse impulsionnelle.
L'homme de l'art observera que l'erreur obtenue est très faible, compatible avec les performances requises notamment dans les applications de traitement de parole telles que l'annulation d'écho acoustique.
On décrira maintenant un deuxième dispositif selon l'invention, en référence à la figure 18. Ce dispositif reçoit en entrée un signal temporel S1 à 2N échantillons, 2N étant ici égal à 1024. Un premier module M1 réalise une transformée de Fourier discrète à 2N points de S1 pour fournir un vecteur fréquentiel X à 2N points, d'indices allant de 0 à 2N-1.
Un module M5 placé en sortie de M1 réalise une décimation de X(0,...,2N-1), de sorte qu'il ne garde qu'un coefficient sur deux de X, pour constituer un vecteur fréquentiel X'(0,...,N-1).

En sortie de M5 est placé un filtre adaptatif dépendant de X' et fournissant un vecteur H(0,..,N-1) à N coefficients. Le vecteur H ne comportant que N coefficients, il ne peut pas être convolué avec X(0,...,2N-1). Il est donc nécessaire de construire à partir de H un vecteur H'(0,... ,2N-1) à 2N coefficients dont la transformée inverse ait ses N premiers échantillons identiques à ceux de la réponse impulsionnelle de H, et dont les N derniers échantillons soient nuls.

On place pour cela un module M3 entre le filtre H et un module de convolution avec la fonction X(0,... ,2N-1).

Le module M3 reçoit en entrée le signal fréquentiel H à N=512 points, correspondant à une réponse impulsionnelle de 512 points.

Partant de ces N=512 points fréquentiels, on cherche à obtenir une fonction H' à 2N points.

Le module M3 se décompose en deux modules $M_3$' et $M_3$''. Le premier module M3' insère un zéro après chacun des N points du signal H pour obtenir un signal $H_0$(0,...,2N-1) à 2N=1024 points dont un coefficient sur deux est nul, et plus précisément dont les coefficients d'indices impairs sont nuls.

Le vecteur fréquentiel $H_0$ ainsi obtenu correspond à une réponse impulsionnelle à 2N=1024 points dont les N premiers points sont les mêmes que ceux de la réponse impulsionnelle de H à un facteur ½ près

La réponse impulsionnelle de H reste donc inchangée par l'introduction de zéros entre les échantillons initiaux, si les échantillons initiaux se retrouvent dans le signal complété à un échantillon sur deux en partant du premier indice du signal complété, c'est à dire à partir de l'indice 0 si le signal complété est indicé à partir de l'indice 0. Les échantillons de H se retrouvent donc aux indices pairs de H'. Une telle insertion ne modifie pas la première partie à 512 points de la réponse impulsionnelle.

Un second module $M_3$'' réalise ensuite un traitement du vecteur fréquentiel complété $H_0$, qui est similaire au traitement décrit précédemment en référence à la figure 17, et qui a pour effet d'annuler les N derniers points de la réponse impulsionnelle à 2N points de $H_0$ sans modifier les N premiers points, et cela à partir du domaine transformé sans revenir dans le domaine temporel.

On utilise ici un filtre de longueur 15 dont les coefficients se calculent d'une manière analogue à ceux du premier exemple de réalisation.

Dans le cas présent, une valeur sur deux du signal fréquentiel $H_0$ à convoluer est nulle. Ainsi, seulement un coefficient sur 2 du filtre doit être multiplié avec une valeur non nulle de $H_0(k)$.

De plus, le fait d'annuler la seconde partie de la réponse impulsionnelle et de conserver inchangée sa première moitié ne modifie pas les 512 coefficients initiaux de la fonction fréquentielle entre lesquels ont été introduits à chaque fois un zéro de la façon précédemment détaillée.

Ainsi, la convolution de $H_0$ avec une fonction U telle que cette proposée précédemment, correspondant à une fenêtre temporelle demi-bande, ne modifie pas les 512 valeurs non nulles de $H_0$, c'est à dire les valeurs $H_0(k)$ pour les valeurs paires de k allant de 0 à 1022.

Au bilan, seules les valeurs nulles de $H_0(k)$ sont à recalculer par convolution.

Il n'est donc nécessaire que de calculer un coefficient sur deux du filtre U. Avec un filtre U de longueur 15 et atteignant son maximum en module, c'est à dire son point de symétrie hermitienne, pour $k_0=7$, c'est à dire avec

$\tilde{U}(k) = \mathrm{sinc}\left(-\frac{Lu-1}{4}+\frac{k}{2}\right).kaiser(k,beta)$ et $U(k) = \tilde{U}(k)e^{-j\pi\left(-\frac{Lu-1}{4}+\frac{k}{2}\right)}$, pour Lu = 15, on obtient les coefficients suivants :

| k | 0 | 2 | 4 | 6 | 7 | 8 | 10 | 12 | 14 |
|---|---|---|---|---|---|---|---|---|---|
| U(k) | 0.0552j | 0.1001j | 0.1952j | 0.6308j | 1 | -0.6308j | -0.1952j | -0.1001j | -0.0552j |

On choisit de préférence Lu impair pour obtenir autant de coefficients de part et d'autre du point de symétrie de U.

Un coefficient sur deux étant inutile, les coefficients à calculer sont tous purement imaginaires et présentent bien une symétrie hermitienne par rapport à $k_0=7$.

Comme dans le cas précédent, les calculs sont avantageusement effectués de la façon suivant

En posant

$$A(k) = Z(k+14)-Z(k)$$

$$B(k) = Z(k+12) - Z(k+2)$$

$$C(k) = Z(k+10) - Z(k+4)$$

$$D(k) = Z(k+8) - Z(k+6)$$

et avec $k_0 = \frac{Lu-1}{2} = 7$ on obtient le résultat interpolé :

$$H'(k) = \begin{cases} H(k) \text{ si } k \text{ est pair} \\ U(0)A(k-7) + U(2)B(k-7) + U(4)C(k-7) + U(6)D(k-7) \text{ si } k \text{ impair} \end{cases}$$

La complexité de calcul est donc de 8 multiplications et de 14 additions réelles pour chacun des points calculés.

Bien entendu, dans un dispositif différent de celui de la figure 18 mais comportant un module M3 similaire, le vecteur H à interpoler peut être la transformée du signal temporel et ce signal temporel peut être réel. Dans un tel cas, la complexité est encore réduite d'un facteur de 2 par la symétrie hermitienne de H.

Nous montrons maintenant les résultats correspondant à cet exemple.
Sur les figures annexées sont représentées :

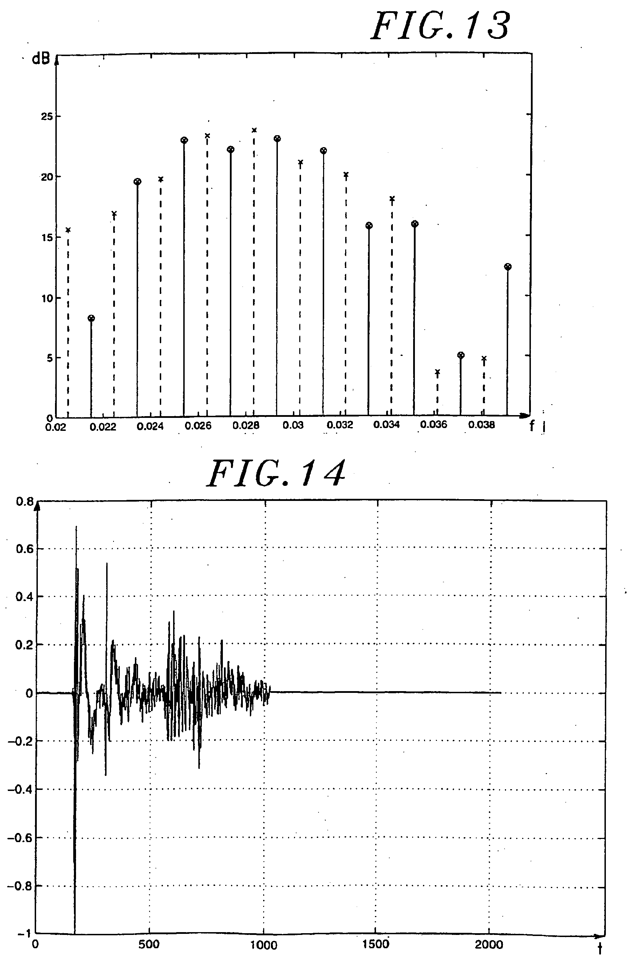

- Sur la figure 13, on a représenté le module de la fonction de transfert du filtre H sur quelques points ainsi que quelques points interpolés pour former le vecteur H' ;
- sur la figure 14, la réponse impulsionnelle d'un filtre H" obtenue à partir de celle de H par la méthode connue consistant en deux transformées de Fourier rapides entre lesquelles est effectué un prolongement de la réponse impulsionnelle de H par 512 zéros,

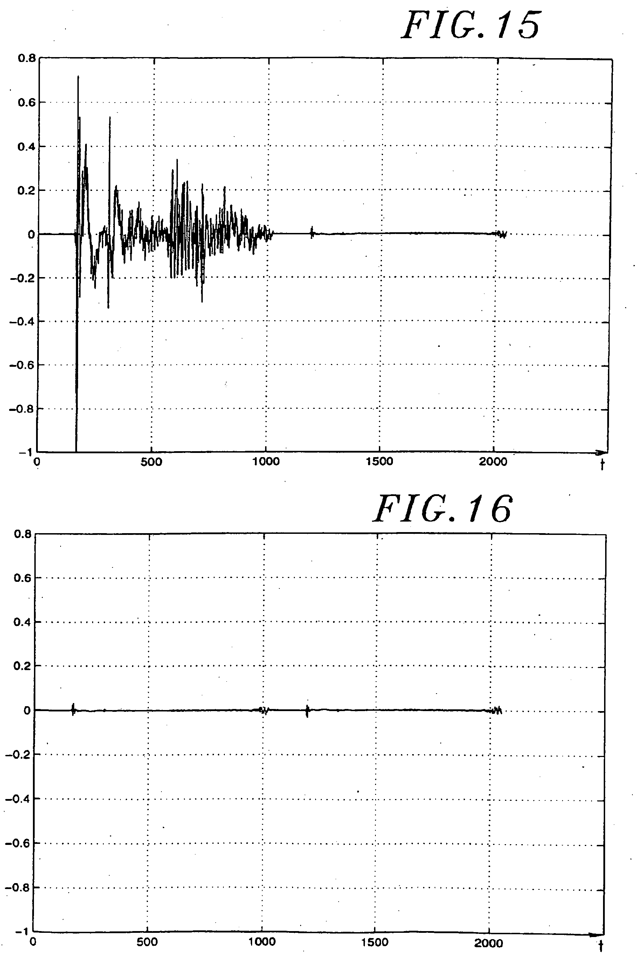

- sur la figure 15, la réponse impulsionnelle du filtre H' obtenu en sortie du module M3 du dispositif de la figure 18,
- sur la figure 16, l'erreur entre la réponse impulsionnelle du filtre H" et la réponse impulsionnelle du filtre H'.

L'homme de l'art observera que l'erreur obtenue est, là aussi, compatible avec les performances requises notamment dans les applications de transmission de parole telles que le débruitage par filtrage optimal.

Dans le dispositif de l'invention, on remplace donc la suite d'opérations complexe : transformation inverse, fenêtrage ou prolongement par des zéros, puis transformation directe, par un filtrage approprié. Ce filtrage de faible complexité est appliqué directement à des données issues de la transformation, qui est fréquemment la transformation de Fourier.

Dans une première variante, le dispositif permet d'approximer, avec un degré de précision adapté à l'application, un fenêtrage temporel mettant à zéro M échantillons consécutifs d'un bloc de T échantillons (M<T). Le filtrage appliqué aux données dans le domaine transformé peut être considéré comme l'équivalent d'un filtrage passe-bas, c'est-à-dire d'un lissage.

Dans une seconde variante, le dispositif permet d'approximer, avec un degré de précision adapté à l'application, le prolongement d'un bloc de N échantillons par M zéros. Le filtrage appliqué aux données dans le domaine transformé peut alors être considéré comme une interpolation permettant de construire les M points manquants pour prolonger les données fréquentielles à N+M points.

Les figures 19, 20 et 21 montrent d'autres exemples de dispositifs conformes à l'invention.

Chacun des dispositifs des figures 19, 20 et 21 présente un filtre H adaptatif à coefficients variables, à N ou 2N coefficients. Chacun de ces dispositifs présente un module M1 recevant en entrée un signal temporel S1 et réalisant une transformée de Fourier de ce signal.

Le premier module M1 du dispositif de la figure 19 reçoit en entrée un bloc temporel S1 à N échantillons. Ce module M1 réalise une transformée de Fourier discrète à N points sur ce signal S1 et fournit ainsi la transformée de Fourier X de ce bloc de N données.

Dans le cas du dispositif de la figure 20, le module M1 complète le signal S1 par des zéros pour obtenir un signal à 2N coefficients, puis réalise la transformée de Fourier discrète à 2N coefficients de ce signal complété.

Dans le cas de ces deux dispositifs, la fonction de transfert du filtre H est calculée à partir de la transformée de Fourier X en sortie du module M1 et s'adapte en fonction de cette transformée de Fourier X. Cette dépendance est symbolisée par une double flèche verticale.

Dans le cas de la figure 19, le dispositif présente en sortie du module M1, un module M2 qui réalise les deux opérations décrites précédemment d'introduction d'un zéro entre chaque couple de valeurs du signal X à N coefficients, pour obtenir un signal X'(0,...,2N-1), puis réalise sur le signal X' une convolution avec un filtre U tel que ceux proposés précédemment.

Ce module M2 réalise donc une interpolation pour étendre directement la taille de la transformée de Fourier à 2N points fréquentiels à partir du signal X à N points, X' ayant pour réponse impulsionnelle la réponse impulsionnelle de X prolongée par des zéros.

Le dispositif de la figure 19 présente également un module M3 réalisant sur la fonction de transfert H du filtre à N points la même opération d'interpolation, c'est à dire l'introduction d'un zéro entre chaque couple de valeurs de H, puis une convolution avec une fonction U telle que celles proposées précédemment, correspondant à une annulation d'unè deuxième partie de la réponse impulsionnelle du filtre à 2N points obtenu par introduction des zéros.

Ainsi, sur la figure 19, on obtient en sortie du module M2 un signal fréquentiel représentatif d'un signal temporel à 2N points dont les N premiers sont ceux du signal d'entrée S1. On obtient en sortie du module M3 un signal fréquentiel S3 à 2N points dont la réponse impulsionnelle à 2N points présente pour ses N premiers points les mêmes valeurs que la réponse impulsionnelle du filtre H, et pour ses N derniers points des valeurs nulles.

Ces deux signaux fréquentiels à 2N points S2 et S3 sont ensuite multipliés au niveau d'un module multiplicateur M4, qui peut également être un module réalisant une corrélation ou une convolution entre S2 et S3.

Le dispositif de la figure 20 présente une structure similaire à celui de la figure 18, à la différence que le filtre adaptatif H présente 2N coefficients, et que le module M3 annule les N derniers coefficients de la réponse impulsionnelle du filtre à partir du domaine fréquentiel. Le lissage permet ainsi de réaliser l'équivalent de la contrainte de convolution linéaire en limitant la longueur de la réponse impulsionnelle du filtre à N points.

La réponse fréquentielle H' ainsi obtenue est multipliée au vecteur X au niveau d'un module multiplicateur de sortie M4.

La figure 21 représente un dispositif de même structure que celui de la figure 18, à la seule différence que le module M1 fournit une transformée fréquentielle à N échantillons, et que le décimeur effectue une décimation de la transformée de Fourier X à N échantillons du bloc de N données en ne conservant qu'un point sur D (D étant un nombre entier supérieur ou égal à 2).

On obtient ainsi un vecteur X' à N/D points, à partir duquel on effectue l'adaptation de la fonction de transfert du filtre H, cette fonction de transfert H ayant L=N/D points. De la même manière que pour le dispositif de la figure 18, on reconstitue par interpolation une fonction de transfert H' sur N points au niveau d'un module M3 conforme à ceux exposés en détail précédemment, avant d'effectuer une convolution linéaire entre H' et X au niveau d'un module multiplicateur M5.

Au sein de M3, un premier module $M_3$' introduit après chaque échantillon de H un nombre D de zéros. Le signal fréquentiel $H_0$ ainsi obtenu correspond à une réponse impulsionnelle à D.L points dont les L premiers points sont les mêmes que ceux de la réponse impulsionnelle de H. La réponse impulsionnelle de H reste en effet inchangée par l'introduction de zéros entre les échantillons initiaux.

Un deuxième sous-module $M_3$'' réalise ensuite un traitement du signal fréquentiel $H_0$ à D.L points obtenu, qui a pour effet d'annuler les (D-1).L derniers points de la réponse impulsionnelle à D.L points de $H_0$, sans modifier les L premiers points de cette réponse impulsionnelle. On obtient ainsi le vecteur fréquentiel H' souhaité à N=D.L points.

Un telle décimation a l'avantage de réduire sensiblement la complexité de calcul pour adapter le filtre H ; elle est applicable dans les cas où la fonction de transfert du filtre est assez régulière pour être décimée sans perte critique d'information.

On notera que, grâce à l'invention, des filtres à très petit nombre de coefficients peuvent être utilisés.

On décrira maintenant un dispositif d'annulation de l'écho acoustique et un dispositif de réduction d'une perturbation (bruit et écho) mettant en oeuvre un dispositif de l'invention.

Il est bien connu que dans certaines applications de transmission de la parole, telles que la téléphonie mains-libres et la téléconférence, des dispositifs appropriés doivent être utilisés pour combattre l'écho acoustique, qui serait sinon une source de gêne considérable dans les conversations.

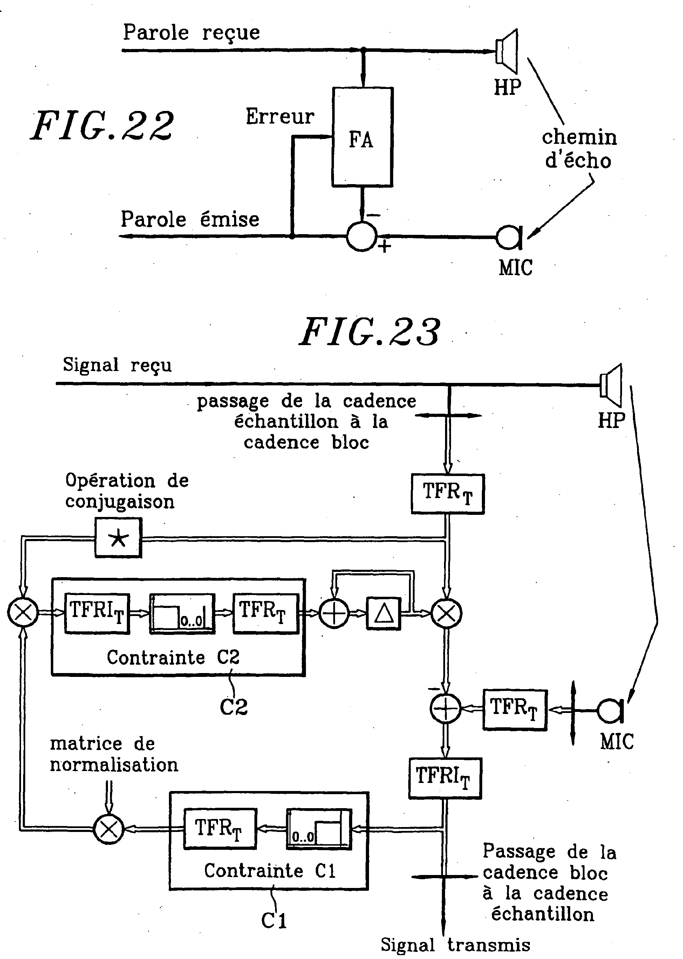

Dans l'état de l'art, ces dispositifs mettent en oeuvre comme représenté à la figure 22, un filtre adaptatif FA dont le rôle est d'identifier et de modéliser la réponse impulsionnelle du chemin de couplage acoustique entre un haut-parleur HP et un microphone MIC du terminal téléphonique mains libres ou du système de téléconférence.

Cette partie du dispositif représentée figure 22, est appelée annuleur d'écho acoustique.

Les réalisations pratiques de ces dispositifs peuvent prendre des formes très diverses, par exemple celles exposées dans le document [8].

Les coefficients du filtre adaptatif FA sont ajustés au cours du temps par un algorithme approprié, qui exploite un signal de parole reçu et une estimation d'erreur présente sur le signal de parole émise à partir du micro MIC et après application sur ce signal du filtre FA. Un algorithme classique pour l'adaptation des coefficients du filtre FA est connu sous le nom de gradient stochastique ou LMS.

On s'intéresse ici à une forme de calculs dite par blocs, mettant en oeuvre la transformation de Fourier ou la transformation de Hartley, cette forme nécessitant un volume de calculs nettement inférieur à la forme temporelle classique.

La figure 23 est un schéma typique de réalisation d'un annuleur d'écho sous forme par blocs. Ce dispositif présente des modules C1 et C2 d'application respectivement d'une contrainte de calcul de corrélation et d'une contrainte de convolution linéaire. On notera que ces modules C1 et C2 appliquent ces contraintes directement sur un signal temporel et sont donc chacun encadrés par un module de transformée inverse et un module de transformée directe.

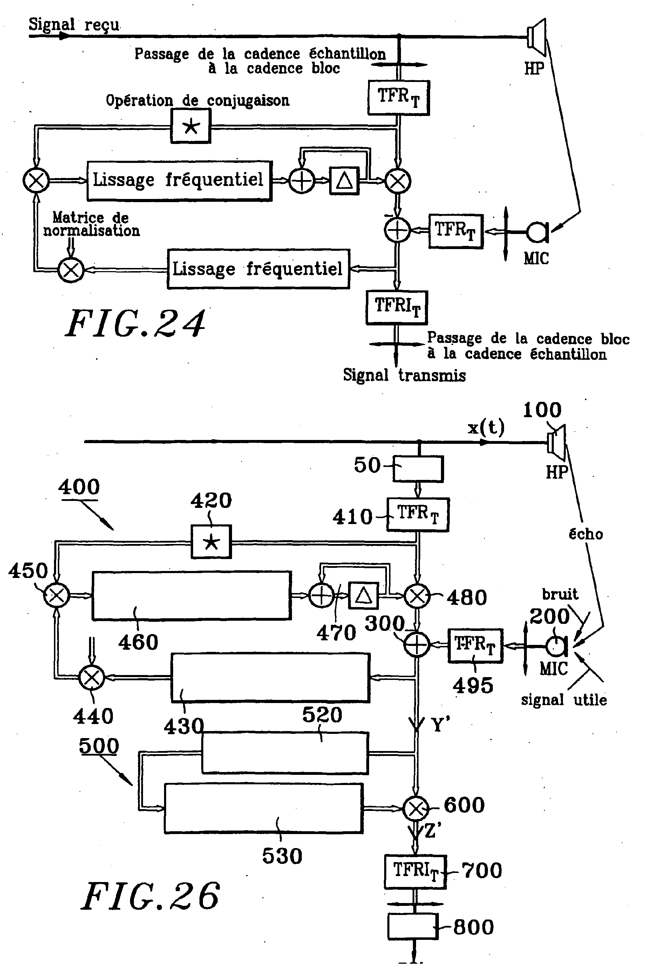

La figure 24 montre un schéma de réalisation d'un annuleur d'écho sous forme par blocs selon l'invention.

Dans ce dispositif, les modules C1 et C2 ainsi que les modules de transformées inverse et directe les encadrant, ont été remplacés à chaque fois par un module de lissage ne comportant pas de calcul de transformée inverse ou directe.

Le tableau suivant détaille le volume de calculs à effectuer pour traiter un bloc d'échantillons réels dans le cas d'un module de contrainte classique à transformées de taille T et dans le cas d'un filtre de lissage fréquentiel de 7 coefficients utilisant les réductions de calcul proposées précédemment :

| | forme classique | Opération effectuée | forme modifiée suivant l'invention |
|---|---|---|---|
| C1 | $2T\log_2 T$<br>$2T\log_2 T$ | (x)<br>(+) | 3T<br>4T |
| C2 | $4T\log_2 T+T$<br>$4T\log_2 T$ | (x)<br>(+) | 3T<br>4T |

Ainsi, si l'on considère une transformée de taille T = 1024, il vient :

| | forme classique | Opération effectuée | forme modifiée suivant l'invention |
|---|---|---|---|
| C1 | 20x1024<br>20x1024 | (x)<br>(+) | 3x1024<br>4x1024 |
| C2 | 41 x 1024<br>40 x 1024 | (x)<br>(+) | 3 x 1024<br>4 x 1024 |

L'emploi du dispositif objet de l'invention représente donc un gain de 109568 opérations arithmétiques, toutes opérations confondues (le nombre d'opérations étant ramené à 14336).

Il est bien connu également que dans les applications de transmission de la parole, le bruit ambiant capté par le microphone du terminal peut être une cause de gêne pour les usagers distants (le niveau de bruit peut être très élevé lorsque la conversation téléphonique a lieu depuis un poste radiotéléphonique mains-libres installé dans un véhicule).

De même, pour un système de transmission installé dans une salle, il est bien connu qu'en absence d'un dispositif annuleur d'écho suivant le principe de la figure 22 ou même en présence d'un dispositif annuleur d'écho dont le filtre adaptatif a une longueur sensiblement plus faible que la réponse acoustique de la salle, l'écho présent sur la voie de parole émise peut être une cause de gêne importante pour ces mêmes usagers distants.

Dans l'état de l'art classique, des techniques basées sur l'emploi d'un atténuateur variable (dites à variation de gain) sont employées pour diminuer la gêne due à l'écho. Dans l'état de l'art plus avancé, des filtres variables ajustés suivant les caractéristiques des différents signaux (dits filtres optimaux) sont employés dans ce but et offrent une qualité subjective meilleure. Ces mêmes filtres variables peuvent être employés pour réduire efficacement le bruit présent sur la parole transmise.

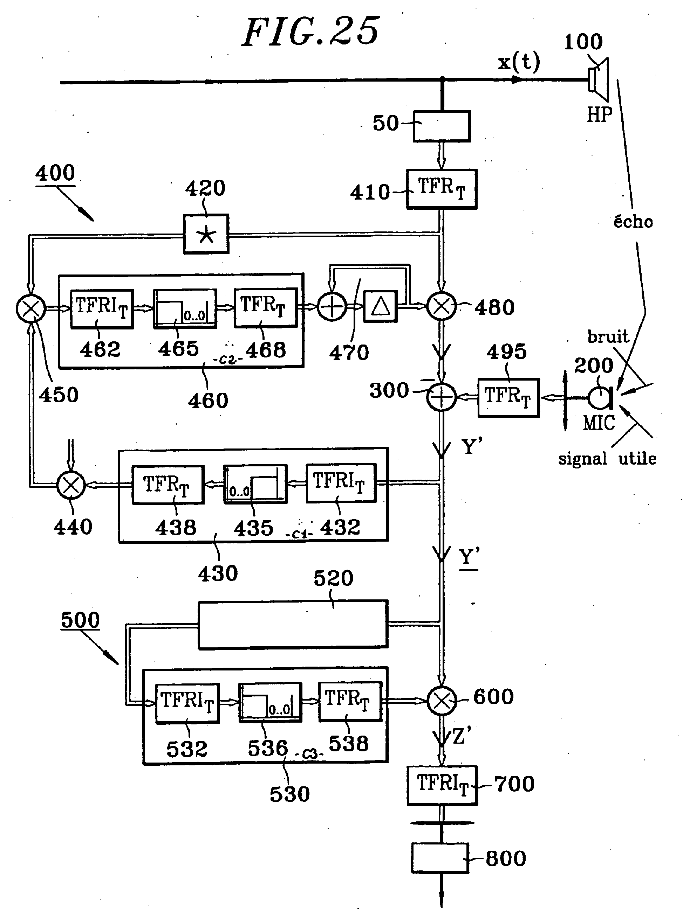

La figure 25 représente un dispositif basé à la fois sur l'emploi d'un annuleur d'écho et sur l'emploi d'un filtre optimal pour effectuer la réduction d'une perturbation composée de bruit et/ou d'écho.

Le module d'annulation d'écho de ce dispositif selon l'invention comporte un haut-parleur 100, un micro 200, un module de soustraction 300 et un ensemble de filtrage 400.

Cet ensemble de filtrage 400 reçoit à une première entrée un signal x(t) arrivant également sur le haut-parleur 100, ce module de filtrage recevant également par une seconde entrée un signal qui est obtenu en sortie du module de soustraction 300, par soustraction sur un signal de micro y(t) transformé dans le domaine fréquentiel d'un signal obtenu par application du module de filtrage sur le signal de haut-parleur x(t).

Le module d'annulation d'écho comporte deux branches se rejoignant en un multiplicateur 450. Une première de ces branches comporte un module 410 de transformée de Fourier directe du signal de haut-parleur x(t), et un module de conjugaison 420 de ce signal transformé. La deuxième de ces branches comporte un module de contrainte C1 réalisant une contrainte sur un signal Y' pour calculer un vecteur erreur, un module 440 de multiplication par une matrice de normalisation en sortie de ce module de contrainte C1. Le module multiplicateur 450 réalise la multiplication entre le vecteur de haut parleur transformé et conjugué et le vecteur erreur multiplié par la matrice de normalisation.

Ce module 450 de multiplication fournit un vecteur fréquentiel à un module de contrainte C2. En sortie de ce module de contrainte C2 est placé un module 470 de mise à jour des coefficients d'un filtre adaptatif de l'annuleur d'écho. Le filtre ainsi mis à jour est appliqué à la transformée du signal de haut-parleur x(t) au niveau d'un module multiplicateur 480 disposé à la sortie du dispositif de mise à jour 470 et en amont du soustracteur 300.

Le dispositif selon l'invention présente un avantage fondamental sur les dispositifs connus, qui est que le signal fréquentiel auquel le filtre est appliqué au niveau du module 480 n'est pas transformé immédiatement dans le domaine temporel pour être soustrait au signal temporel d'entrée de micro y(t), mais est conservé dans le domaine fréquentiel. Ainsi, dans ce dispositif, c'est le signal de micro y(t) qui est transformé dans le domaine fréquentiel pour pouvoir soustraire à ce signal de micro transformé dans le domaine fréquentiel le signal d'écho estimé, obtenu en sortie du multiplicateur 480, qui est conservé dans le domaine fréquentiel. Cette opération de soustraction dans le domaine fréquentiel est réalisée au niveau du soustracteur 300 qui est disposé entre le module 480 d'application du filtre adaptatif d'annulation d'écho et un module de transformée de Fourier directe de sortie de micro 495.

Au sein de ce dispositif, ce n'est pas un signal d'erreur temporel correspondant au signal de micro auquel est soustrait le signal d'écho estimé, qui est transmis au module de contrainte C1. On transmet au module de contrainte C1 un vecteur fréquentiel d'erreur sans retour dans le domaine temporel entre le calcul de ce vecteur d'erreur et le module de contrainte C1. Ce vecteur fréquentiel d'erreur est égal à la différence entre la transformée fréquentielle du signal de haut parleur auquel est appliqué le filtre adaptatif 470, et le signal de micro transformé dans le domaine fréquentiel. Ainsi, le module de contrainte C1 ne présente pas comme dans le cas des dispositifs connus, deux sous modules, mais trois sous modules qui sont successivement un premier sous-module 432 de transformée de Fourier inverse dans le domaine temporel, un second sous-module 435 d'annulation d'une partie initiale du signal temporel obtenu en sortie du module 432, et un troisième sous module 438 réalisant une transformation de Fourier directe du signal temporel ainsi tronqué dans le domaine fréquentiel.

Ainsi, le module de contrainte C1 réalise sur le vecteur d'erreur fréquentielle qui lui est transmis, un traitement équivalent à une troncature de la transformée temporelle de ce signal d'erreur fréquentielle.

Le signal d'erreur fréquentielle Y' est donc utilisé par l'ensemble formé des modules 430 de contrainte C1, 460 de contrainte C2, 450 de multiplication et 420 de conjugaison, pour calculer, avec un nouveau bloc d'échantillons x((t+1) B), un nouveau jeu de coefficients du filtre adaptatif qui sera appliqué à ce nouveau bloc de données de haut parleur x((t+1)B) pour former un nouveau vecteur Y'.

Le signal Y' obtenu en sortie du soustracteur 300 n'est pas seulement fourni au module de contrainte C1, il est également transmis à la seconde partie du dispositif formant un réducteur de perturbations.

Celui-ci est de forme classique en lui-même. Le signal Y' obtenu en sortie de l'annuleur d'écho est fourni à l'entrée d'une boucle 500 décrivant successivement deux modules 520 et 530. Le module 520 réalise un calcul des coefficients du filtre réducteur de perturbations à partir du signal fréquentiel Y'. Le vecteur fréquentiel de sortie de ce premier module 520 est fourni à un module 530 réalisant une contrainte C3 sur ce vecteur fréquentiel. Le module 530 se décompose en trois sous modules, un premier sous module 532 réalisant une transformation de Fourier inverse du vecteur fréquentiel de sortie du module 520 de façon à fournir le signal temporel correspondant à ce vecteur. Ce signal temporel est ensuite soumis à un sous module 536 qui annule une partie de ce vecteur et plus précisément une partie finale de celui-ci, puis le vecteur temporel tronqué subit une transformée de Fourier directe au niveau d'un troisième sous module 538. La boucle 500 fournit ainsi un filtre réducteur de perturbations dont les coefficients fréquentiels sont tels que leur transformée de Fourier inverse a un nombre de coefficients non nuls réduit.

Le vecteur fréquentiel obtenu en sortie du second module 530 est appliqué au signal fréquentiel d'erreur Y' au niveau d'un module de multiplication 600. On obtient ainsi un signal fréquentiel Z' correspondant à la transformée de Fourier d'un signal temporel dont l'écho a été annulé et dont des perturbations, ici le bruit, ont été réduites.

Le vecteur fréquentiel Z' ainsi obtenu est ensuite transformé dans le domaine temporel par un module de sortie 700 réalisant une transformée de Fourier inverse sur ce signal Z'. On obtient alors un bloc d'échantillons temporel dont l'écho a été annulé et dont les perturbations ont été réduites.

On notera également que l'on dispose en sortie de ce dispositif un module 800 réalisant un passage d'une cadence bloc à une cadence échantillon. Le message sonore obtenu est ensuite transmis à un correspondant qui reçoit donc le signal sonore présent devant le micro 200 à l'instant considéré, duquel ont été supprimés l'écho et le bruit.

Ainsi ce dispositif permet de supprimer un module de transformée de Fourier directe qui existait classiquement entre un module de calcul d'erreur et un module de réduction de perturbations lorsque deux tels modules étaient couplés. Le signal fréquentiel Y' est donc fourni directement à la boucle 500 et notamment au premier module de cette boucle réalisant un calcul du filtre réducteur de perturbations.

On obtient ainsi en sortie du module de contrainte 530 un jeu de coefficients du filtre réducteur de perturbations adapté en fonction du signal Y'.

Le dispositif qui vient d'être décrit présente un réducteur de bruit. Toutefois ce réducteur de bruit peut être remplacé par un module de réduction d'écho, un réducteur diminuant un mélange d'écho et de bruit, ou plus généralement tout réducteur de perturbations.

On notera la présence de trois modules de contraintes C1, C2 et C3 consistant chacun en un module d'annulation d'une partie d'un signal temporel encadré par deux transformées, une inverse et une directe. La contrainte C3 peut être vue comme une contrainte de convolution linéaire. Selon l'invention, on peut considérer C3 comme un moyen pour lisser la réponse en fréquence du filtre et contrôler la sélectivité de ce filtre en limitant son support temporel et en annulant donc autant d'échantillons que nécessaire pour effectuer ensuite la transformée de taille T.

Conformément à l'invention, on remplace chacun des trois modules de contrainte C1, C2, C3 par un module de lissage fréquentiel. Selon le but recherché, la contrainte C3 peut être remplacée par un module de lissage fréquentiel ou un module d'interpolation faisant objet de l'invention. Le volume des calculs effectués dans le dispositif de l'invention est nettement plus faible que dans le cas du dispositif classique.

Ainsi, sur la figure 25, la réalisation d'un annuleur d'écho combiné à une réduction de perturbations par filtrage optimal nécessite l'emploi de 9 transformées. Le dispositif de la figure 26 ne diffère de celui qui vient d'être décrit en référence à la figure 25 qu'en ce que les trois modules de contrainte C1, C2 et C3 ont été remplacés par des modules de lissage utilisant une convolution avec une fonction U telle que celles qui ont été décrites précédemment.

Comme il est montré sur la figure 26, un système correspondant selon l'invention nécessite seulement 3 transformées et 3 modules de lissage, les trois modules de lissage remplaçant chacun un ensemble de deux transformées et d'une contrainte temporelle.

Le tableau suivant détaille le volume de calculs à effectuer pour réaliser les contraintes C1, C2 et C3 dans le cas d'une transformée de taille T (figure 25) et dans le cas d'un filtre de lissage fréquentiel de 7 coefficients (figure 26) :

| | Forme classique | Opération effectuée | Forme modifiée suivant l'invention |
|---|---|---|---|
| C1 | $4T\log_2 T + T$<br>$4T\log_2 T$ | (x)<br>(+) | 4T<br>7T |
| C2 | $4T\log_2 T + T$<br>$4T\log_2 T$ | (x)<br>(+) | 4T<br>7T |
| C3 | $4T\log_2 T + T$<br>$4T\log_2 T$ | (x)<br>(+) | 4T<br>7T |

Ainsi, si l'on considère une transformée de taille T = 1024, il vient :

| | Forme classique | Opération effectuée | Forme modifiée suivant l'invention |
|---|---|---|---|
| C1 | 41 x 1024<br>40 x 1024 | (x)<br>(+) | 4 x 1024<br>7 x 1024 |
| C2 | 41 x 1024<br>40 x 1024 | (x)<br>(+) | 4 x 1024<br>7 x 1024 |
| C3 | 41 x 1024<br>40 x 1024 | (x)<br>(+) | 4 x 1024<br>7 x 1024 |

L'emploi d'un dispositif conforme à l'invention représente donc un gain de 215040 opérations arithmétiques, toutes opérations confondues. (Le nombre d'opérations étant ramené à 33792).

Il permet de faire directement dans le domaine transformé, c'est à dire le domaine fréquentiel, l'équivalent de la mise à zéro d'un nombre donné de coefficients temporels (lissage) ou l'équivalent de l'ajout d'un nombre donné de zéros dans le domaine temporel (interpolation), condition nécessaire pour ne pas générer de convolution/corrélation circulaire lorsque l'on fait du filtrage/corrélation dans le domaine transformé, comme cela est exposé en détail dans le document [6].

Ainsi, un dispositif conforme à celui de la figure 25 est particulièrement adapté à une réduction importante de calculs en utilisant une fonction U telle que celles décrites précédemment. Un tel dispositif, muni de tels modules de lissage, permet d'effectuer l'annulation d'écho et la réduction de perturbations totalement dans le domaine fréquentiel, sans retour dans le domaine temporel coûteux en calculs.

Les différents dispositifs décrits peuvent être réalisés au moyen de la technique de l'état de l'art, notamment au moyen de processeurs de signal en temps réel (DSP) typiquement à arithmétique flottante, tel que ceux couramment utilisés dans les applications audio et de télécommunications (par exemple TMS320C3X ou TMS320C4X de TEXAS INSTRUMENTS) ; des processeurs à arithmétique fixe peuvent aussi être utilisés, en respectant les précautions usuelles de cadrage approprié des données dans les traitements. Il est à noter que l'invention ne présente pas uniquement des avantages en complexité, mais elle rend aussi l'implémentation plus facile (pas de permutation « scrambling », moins de problèmes de cadrage pour calcul en virgule fixe, programme plus simple, adressage plus simple,... ).

Un dispositif selon l'invention est donc du plus grand intérêt dès que l'on fait du filtrage variable dans le temps et que l'on travaille dans le domaine transformé.

Ceci englobe donc non seulement le filtrage adaptatif utilisé en annulation d'écho mais notamment, de façon plus générale, tout filtrage adaptatif dont les utilisations sont multiples : débruitage, séparation de signaux, etc.

Un contexte typique d'application d'un dispositif de l'invention est décrit dans [7], où un dispositif classique à deux transformées encadrant un module de fenêtrage est utilisé pour attribuer au filtre des caractéristiques sélectives en modifiant la taille de la réponse impulsionnelle de celui-ci.

Dans certains modes de réalisation décrits ici, on convolue avec U une fonction X qui est la Transformée de Fourier discrète d'un signal temporel discret. Bien entendu, une fonction U telle que celles décrites ci-dessus s'applique de la même façon à des signaux fréquentiels correspondant à une transformée de Fourier discrétisée d'un signal temporel continu.


- [1]G.A. CLARK, R. PARKER, S.K. MITRA, « A Unified Approach to Time- and-Frequency-Domain Relaization of FIR adaptive Digital Filters », IEEE Trransactions on Acoustics, Speech and Signal Processing, Vol. ASSP-31, No. 5, October 1983.
- [2] D. MANSOUR, A.H. GRAY, Jr., « Unconstrained Frequency-Domain Adaptive Filter », IEEE Transactions on Acoustics, Speech and Signal Processing, Vol. ASSP-30, No. 5, October 1982, pp. 726-734.
- [3] J. PRADO, E. MOULINES, « Frequency-domain-adaptive filtering with applications to acoustic echo cancellation », Annales des Télécommunications, tome 49 n° 7-8, Juillet-Août 1994, pp. 414-428.
- [4] Brevet H. McLAUGHLIN, Sté Signalworks, USA, pour « System and method for an efficiently constrained frequency-domain adaptive filter », réf. US 5 526 426, filed 8 Nov. 1994, issued 11 June 1996.
- [5] Brevet P. SOMMEN, T.A. CLAASEN, P. VAN GERWEN, H. KOTMANS, Philips Corporation, pour « Frequency-domain block-adaptive digital filter », réf. US 4 807 173, filed 3 June 1987, issued 21 Feb. 1989.
- [6] A.V. OPPENHEIM, R.W. SCHAFER, « Digital Signal Processing », Prentice-Hall, 1975.
- [7] V. TURBIN, A. GILLOIRE, P. SCALART, « Comparison of three post-filtering algorithms for residual acoustic echo reduction », ICASSP'97, Munich, Vol. 1, pp. 307-310.
- [8] E. HÄNSLER, « The hands-free telephone problem : an annotated bibliography update », Annales des Télécommunications, 49, n° 7-8. 1994, pp. 360-367.


## Revendications

1. Dispositif de traitement de données numériques comportant un module (M2, M3, $M''_3$) réalisant sur un vecteur de données du domaine fréquentiel Z(k), où k varie de 0 à N-1, une convolution avec une fonction U, convolution qui correspond à une annulation dans le domaine temporel d'échantillons de la transformée inverse de Z(k), **caractérisé en ce que** la fonction U est de la forme : $U(k) = \mathrm{sinc}\left(\frac{k-k_0}{2}\right) e^{-j\pi\left(\frac{\alpha(k-k_0)}{2}\right)} . P(k)$, où $k_0$ est un entier constant , P(k) est une fenêtre de pondération symétrique autour de $k_0$ et $\alpha$ est une constante.

2. Dispositif selon la revendication précédente, **caractérisé en ce que** $k_0$ est égal à zéro.

3. Dispositif selon l'une des revendications précédentes, **caractérisé en ce qu'**il comprend un module ($M_3$') recevant un vecteur fréquentiel (H), apte à insérer entre deux coefficients de ce vecteur (H) à chaque fois un coefficient supplémentaire de façon à fournir un vecteur fréquentiel (H') de longueur augmentée.

4. Dispositif selon la revendication précédente, **caractérisé en ce que** les coefficients supplémentaires sont des zéros.

5. Dispositif selon l'une des revendications 3 ou 4, **caractérisé en ce que**, le vecteur fréquentiel de longueur augmentée (H') étant indicé de 0 à 2N-1, les coefficients insérés sont les coefficients d'indices impairs.

**6.** Dispositif selon l'une des revendications 3 à 5, **caractérisé en ce que** le module (M2, M3, M"$_3$) réalisant une convolution avec U est placé en aval du module d'insertion (M'$_3$) et **en ce que** Z est le vecteur fréquentiel de longueur augmentée (H').

**7.** Dispositif selon l'une quelconque des revendications précédentes, **caractérisé en ce qu'**il comporte un filtre (H) en amont du module (M2,M3,M"$_3$) de convolution avec U, et **en ce que** Z est la fonction de transfert de ce filtre (H).

**8.** Dispositif selon la revendication précédente, **caractérisé en ce qu'**il comporte des moyens de calcul (H) des coefficients du filtre (H) à partir d'un signal d'entrée (X,S1) du dispositif.

**9.** Dispositif selon l'une quelconque des revendications précédentes, **caractérisé en ce qu'**il comporte un module (M1) apte à réaliser un transformée dans le domaine fréquentiel d'un signal temporel d'entrée (S1), ce module (M1) étant en amont du module (M2,M3,M"$_3$) de convolution avec U, et **en ce que** Z est cette transformée fréquentielle (X), éventuellement complétée par l'intermédiaire d'un module d'insertion (M'$_3$) conforme à l'une des revendication 3 à 5.

**10.** Dispositif selon les revendications 6, 7 et 9 en combinaison, **caractérisé en ce qu'**il comporte un premier module (M2) appliquant une convolution avec une première fonction de la forme

$U(k) = \sin c\left(\frac{k-k_0}{2}\right).e^{-j\pi\left(\frac{\alpha(k-k_0)}{2}\right)}.P(k)$ sur une transformée fréquentielle (X) d'un signal d'entrée (S1) éventuellement complété, un second module de convolution (M3) appliquant une convolution avec une deuxième fonction de la forme $U(k) = \sin c\left(\frac{k-k_0}{2}\right).e^{-j\pi\left(\frac{\alpha(k-k_0)}{2}\right)}.P(k)$ sur la réponse fréquentielle (H) d'un filtre (H) éventuellement complétée, les vecteurs de sortie (X',S3) de ces deux modules (M2,M3,M"$_3$) ayant un même nombre de coefficients, et **en ce que** le dispositif comporte en sortie un module (M4) apte à multiplier les coefficients de ces deux vecteurs de sortie (X',S3).

**11.** Dispositif selon l'une des revendications précédentes en combinaison avec l'une des revendications 3 à 5, **caractérisé en ce que** le module (M2,M3,M"$_3$) de convolution avec U fournit un vecteur de sortie (H',S3) de même longueur que le vecteur complété Z, en conservant dans le vecteur de sortie (H', S3) les coefficients du vecteur Z qui étaient présents avant insertion, et les autres coefficients du vecteur de sortie (H',S3) étant obtenus par convolution de Z et U.

**12.** Dispositif selon l'une des revendications précédentes, **caractérisé en ce que** le module (M2,M3,M"$_3$) de convolution avec U fournit en sortie un vecteur B($0_1$..., N-1) qui est tel que quel que soit k, un coefficient d'indice k de B est égal à un produit de convolution entre Z et U qui est tel que le coefficient d'indice k de Z est multiplié dans ce produit de convolution avec le coefficient d'indice $k_0$ de U pour lequel la fonction sinc a pour argument 0.

**13.** Dispositif selon l'une quelconque des revendications précédentes, **caractérisé en ce que** le filtre U prend des valeurs non nulles sur un intervalle de valeurs de k qui est symétrique par rapport à la valeur $k_0$ pour laquelle U atteint son maximum de module.

**14.** Dispositif selon l'une des revendications précédentes, **caractérisé en ce que** la fonction U comporte un nombre de coefficients Lu impair, et **en ce que** U peut s'écrire : $U(k) = \sin c\left(-\frac{Lu-1}{4}+\frac{k}{2}\right).e^{-j\pi\alpha\left(-\frac{Lu-1}{4}+\frac{k}{2}\right)}.P(k)$

**15.** Dispositif selon l'une quelconque des revendications précédentes en combinaison avec l'une des revendications 9 ou 10, **caractérisé en ce que** la transformée est une transformée de Fourier discrète.

**16.** Dispositif selon l'une des revendications précédentes, **caractérisé en ce que** la fenêtre de pondération est une fenêtre de Kaiser de coefficient 1,5.

**17.** Dispositif selon l'une des revendications précédentes, **caractérisé en ce qu'**il constitue un annuleur d'écho,

**18.** Dispositif selon l'une des revendications précédentes, **caractérisé en ce qu'**il constitue un réducteur de bruit.

**19.** Dispositif selon l'une des revendications précédentes, **caractérisé en ce que** $\alpha = 1$

**20.** Dispositif selon l'une des revendications précédentes, **caractérisé en ce que** $\alpha = -1$.

**21.** Dispositif selon l'une des revendications précédentes, **caractérisé en ce qu'**il comprend un haut-parleur (100), un micro (200), un annuleur d'écho (420,430,440,450) et un réducteur de perturbations (500), l'annuleur d'écho comportant un filtre adaptif (470) et un module de soustraction (300) fournissant l'erreur (Y') entre un signal provenant du micro (200) et un signal obtenu par application du filtre adaptatif (460) à un signal de haut-parleur (100), le filtre adaptatif (460) adaptant ses coefficients en fonction de cette erreur, et le dispositif comportant des moyens (495) aptes à transformer le signal de micro dans le domaine fréquentiel en amont du module de soustraction (300) de façon à ce que la soustraction soit effectuée dans le domaine fréquentiel.

**22.** Dispositif selon la revendication précédente, **caractérisé en ce qu'**il présente des moyens (430,440) pour transmettre le résultat de cette soustraction fréquentielle au filtre adaptatif (470) de l'annuleur d'écho.

**23.** Dispositif selon la revendication 21, **caractérisé en ce que** le réducteur de perturbations (500) est placé en aval du module soustracteur (300) et est appliqué dans le domaine fréquentiel au résultat de la soustraction.

**24.** Dispositif selon la revendication précédente, **caractérisé en ce que** le réducteur de perturbations (500) comporte un filtre adaptatif (520), apte à recalculer ses coefficients en fonction d'un signal d'entrée fréquentiel (Y') du réducteur de perturbations (500).

**25.** Dispositif selon la revendication précédente, **caractérisé en ce que** le réducteur de perturbations (500) est placé pour recevoir en tant que ledit signal d'entrée fréquentiel du réducteur de perturbations le signal (Y') fréquentiel de sortie du module soustracteur (300).

**26.** Dispositif selon l'une des revendications 24 ou 25, **caractérisé en ce que** le réducteur de perturbations (500) forme une boucle recevant en entrée le signal fréquentiel de sortie (Y') du soustracteur (300), et appliquant en sortie une multiplication des coefficients adaptés de son filtre adaptatif sur le signal fréquentiel de sortie (Y') du soustracteur (300).

**27.** Dispositif selon l'une des revendications 24 à 26, **caractérisé en ce que** le même signal fréquentiel (Y') est utilisé comme erreur pour adapter le filtre adaptatif (470) de l'annuleur d'écho et est multiplié par les coefficients, du filtre adaptatif (520) du réducteur de perturbations (500).

**28.** Dispositif selon l'une des revendications 21 à 27, **caractérisé en ce qu'**aucun module de transformée n'est placé entre le module soustracteur (300) et le réducteur de perturbations (500).

## Claims

**1.** Device for processing digital data comprising a module (M2, M3, M"$_3$) carrying out on a vector of data of the frequency domain Z(k), where k varies from 0 to N-1, a convolution with a function U, which convolution corresponds to a cancellation in the time domain of samples of the inverse transformé of Z(k), **characterised in that** the function U is of the form:

$$U(k) = \operatorname{sinc}\left(\frac{k-k_0}{2}\right) \cdot e^{-j\pi\left(\frac{\alpha(k-k_0)}{2}\right)} \cdot P(k) \;,$$

where $k_0$ is a constant is a constant integer, P (k) is a weighting window symmetric about $k_0$ and $\alpha$ is a constant.

**2.** Devise according to the preceding claim, **characterized in that** $k_0$ is equal to zero.

**3.** Devise according to one of the preceding claims, **characterised in that** it comprises a module ($M'_3$) receiving a frequency vector (H), able to insert between two coefficients of this vector (H) each time an additional coefficient so as to provide a frequency vector (H') of augmented length.

**4.** Device according to the preceding claim, **characterised in that** the additional coefficients are zeros.

**5.** Device according to one of Claims 3 or 4, **characterized in that**, the frequency vector of augmented length (H') being indexed from 0 to 2N-1, the inserted coefficient are the coefficients of odd indices.

**6.** Devise according to once of Claims 3 to 5, **characterized in that** the module (M2, M3, $M''_3$) carrying out a convolution with U is placed downstream of the insertion module ($M'_3$) and **in that** Z is the frequency vector of augmented length (H').

**7.** Device according to any one of the preceding claims, characterize in that it comprises a filter (H) upstream of the module (M2, M3, $M''_3$) for convolution with U, and in that Z is the transfer function of this filter (H).

**8.** Device according to the preceding claim, **characterized in that** it comprise means (H) for calculating the coefficients of the filter (H) on the basis of an input signal (X,S1) of the device.

**9.** Device according to any one of the preceding claims, **characterized in that** it comprise a module (M1) able to carry out a transform into the frequency domain of an input temporal signal (S1), this module (M1) being upstream of the module (M2, M3 , $M''_3$) for convolution with U, and **in that** Z is this frequency transformé (X), possibly supplemented by way of an insertion module ($M'_3$) in accordance with one of Claims 3 to 5.

**10.** Devise according to Claims 6, 7 and 9 in combination, **characterized in that** it comprises a first module (M2) applying a convolution with a first function of the form

$$U(k) = \mathrm{sinc}\left(\frac{k-k_0}{2}\right) \cdot e^{-j\pi\left(\frac{\alpha(k-k_0)}{2}\right)} \cdot P(k)$$

to a frequency transformé (X) of a possibly supplemented input signal (S1), a second convolution module (M3) applying a convolution with a second function of the form

$$U(k) = \mathrm{sinc}\left(\frac{k-k_0}{2}\right) \cdot e^{-j\pi\left(\frac{\alpha(k-k_0)}{2}\right)} \cdot P(k)$$

to the frequency response (H) of a possibly supplemented filter (H), the output vectors (X', S3) of these two modules (M2, M3, $M''_3$) heaving one and the same number of coefficients, and **in that** the device comprises at output a module (M4) able to multiply the coefficients of these two output vectors (X',S3).

**11.** Device according to one of the preceding claims in combination with one of Claims 3 to 5, **characterized in that** the module (M2, M3 , $M''_3$) for convolution with U provides an output vector (H', S3) of the same length as the supplemented vector Z, preserving in the output sector (H', S3) the coefficients of the vector Z which were present before insertion, and the other coefficients of the output vector (H', S3) being obtained by convolution of Z and U.

**12.** Devise according to one of the preceding claims, **characterized in that** the module (M2 , M3 , $M''_3$) for convolution

with U provides as output a sector B (0,..., N -1) which is such that regardless of k, a coefficient of index k of B is equal to a convolution produit between z and U which is such that the coefficients of index k of Z is multiplied in this convolution product with the coefficient of index $k_0$ of U for which the sinc function has argument 0.

**13.** Device according to any on e of the preceding claims, **characterized in that** the filter U takes nonzero values over an interval of values of k which is symmetric with respect to the value $k_0$ for which U attains its maximum modulus.

**14.** Device according to one of the preceding claims, **characterized in that** the function U comprises an odd number of coefficients Lu, and **in that** U can be written :

$$U(k) = \operatorname{sinc}\left(-\frac{Lu-1}{4}+\frac{k}{2}\right)\cdot e^{-j\alpha\pi\left(-\frac{Lu-1}{4}+\frac{k}{2}\right)}\cdot P(k)$$

**15.** Device according to any one of the preceding claims in combination with one of Claims 9 or 10, **characterized in that** the transform is a discrete Fourier transform.

**16.** Device according to one of the preceding claims, **characterized in that** the weighting window is a Kaiser window with coefficient 1.5.

**17.** Device according to one of the preceding claims, **characterized in that** it constitutes an echo canceller.

**18.** Device according to one of the preceding claims, **characterized in that** it constitutes a noise reducer.

**19.** Device according to one of the preceding claims, **characterized in that** $\alpha = 1$.

**20.** Device according to one of the preceding claims, **characterized in that** $\alpha = -1$.

**21.** Device according to one of the preceding claims, **characterized in that** it comprises a loudspeaker (100) , a mike (200), an echo canceller (420, 430, 440, 450) and a disturbance reducer (500), the echo canceller comprising an Adaptive filter (470) and a subtraction module (300) providing the error (Y') between a signal originating from the mike (200) and a signal obtained by applying the adaptive filter (460) to a loudspeaker (100) signal, the adaptive filter (460) adapting its coefficients as a function of this error, and the devise comprising means (495) able to transform the mike signal into the frequency domain upstream of the subtraction module (300) in such a way that the subtraction is performed in the frequency domain.

**22.** Device according to the preceding claim, **characterized in that** it exhibits means (430, 440) for transmitting the result of this frequency subtraction to the adoptive filter (470) of the echo canceller.

**23.** Device according to Claim 21, **characterized in that** the disturbance reducer (500) is placed downstream of the subtracter module (300) and is applied in the frequency domain to the result of the subtraction.

**24.** Device according to the preceding claim, **characterized in that** the disturbance reduces (500) comprises an adaptive filter (520), able to recalculate its coefficients as a function of a frequency input signal (Y') of the disturbance reducer (500).

**25.** Device according to the preceding claim, **characterized in that** the disturbance reducer (500) is placed so as to receive the output frequency signal (Y') of the subtracter module (300) in the guise of said frequency input signal of the disturbance reducer.

**26.** Device according to one of Claims 24 or 25, **characterized in that** the disturbance reducer (500) formes a loop receiving as input the output frequency signal (Y') of the subtracter (300) , and applying as output a multiplications of the adapted coefficients of its adaptive filter to the output frequency signal (Y') of the subtracter (300) .

**27.** Device according to one of Claims 24 to 26, **characterized in that** the same frequency signal (Y') is used as error to adapt the adaptive filter (470) of the echo canceller and is multiplied by the coefficients of the adaptive filter (520) of the disturbance reducer (500) .

**28.** Device according to one of Claims 21 to 27, **characterized in that** no transform module is placed between the subtracted modules (300) and the disturbance reducer (500).

**Patentansprüche**

**1.** Verarbeitungsvorrichtung digitaler Daten, die ein Modul (M2 , M3, M"$_3$) aufweist, das auf einem Datenvektor des Frequenzbereichs Z(k), wobei k von 0 bis N-1 variiert, eine Faltung mit einer Funktion U ausführt, wobei die Faltung einer Annullierung in dem Zeitbereich von Abtastwerten der umgekehrten Transformierten von Z(k) entspricht, **dadurch gekennzeichnet, dass** die Funktion U die folgende Form hat:

$$U(k) = \operatorname{sinc}\left(\frac{k-k_0}{2}\right) \cdot e^{-j\pi\left(\frac{\alpha(k-k_0)}{2}\right)} \cdot P(k)$$

wobei $k_0$ eine konstante Ganzzahl, P (k) ein symmetrisches Gewichtungsfenster um $k_0$ und $\alpha$ eine Konstante ist.

**2.** Vorrichtung nach dem vorhergehenden Anspruch, **dadurch gekennzeichnet, dass** $k_0$ gleich null ist.

**3.** Vorrichtung nach einem der vorhergehenden Ansprüche, **dadurch gekennzeichnet, dass** sie ein Modul (M'$_3$) aufwe ist, das einen Frequenzvektor (H) empfängt, das zwischen zwei Koeffizienten dieses Vektors (H) jedes Mal einen zusätzlichen Koeffizienten derart einfügen kann, dass ein Frequenzvektor (H') mit erhöhter Länge geliefert wird.

**4.** Vorrichtung nach dem vorhergehenden Anspruch, **dadurch** gekenntzeichnet, dass die zusätzlichen Koeffizienten Nullen sind.

**5.** Vorrichtung nach einem der Ansprüche 3 oder 4 , **dadurch gekennzeichnet, dass** der Frequenzvektor mit erhöhter Länge (H') von 0 bis 2N-1 indiziert ist, wobei die eingefügten Koeffizienten Koeffizienten mit ungeraden Indizes sind.

**6.** Vorrichtung nach einem der Ansprüche 3 bis 5, **dadurch gekennzeichnet, dass** das Modul (M2, M3, M"$_3$), das eine Faltung mit U ausführt, stromabwärts des Einfügemoduls (M'$_3$) platziert ist, und dass Z der Frequenzvektor mit erhöhter Länge (H') ist .

**7.** Vorrichtung nach einem der vorhergehenden Ansprüche, **dadurch gekennzeichnet, dass** sie ein Filter (H) stromaufwärts des Moduls (M2, M3, M"$_3$) zur Faltung mit U aufweist, und dass Z die Transferfunktion dieses Filters (H) ist.

**8.** Vorrichtung nach dem vorhergehenden Anspruch, **dadurch gekennzeichnet, dass** sie Mittel zum Berechnen (H) der Koeffizienten des Filters (H) ausgehend von einem Eingangssignal (X, S1) der Vorrichtung aufweist.

**9.** Vorrichtung nach einem der vorergehenden Ansprüche, **dadurch gekennzeichnet, dass** sie ein Modul (M1) aufweist , das eine Transformierte in dem Frequenzbereich eines zeitlichen Eingangssignales (S1) herstellen kann, wobei dieses Modul (M1) stromaufwärts des Moduls (M2, M3, M"$_3$) zur Faltung mit U liegt, und dass Z diese Frequenztransformierte X, die eventuell über ein Einfügemodul (M'$_3$) gemäß einem der Ansprüche 3 bis 5 ergänzt ist, ist.

**10.** Vorrichtung nach einem der Ansprüche 6, 7 und 9 kombiniert, **dadurch gekennzeichnet**, das sie ein erstens Modul (M2) aufweist, das eine Faltung mit einer ersten Funktion mit der Form

$$U(k)=\sin c\left(\frac{k-k_0}{2}\right)\cdot e^{-j\pi\left(\frac{\alpha(k-k_0)}{2}\right)}\cdot P(k)$$

auf einer Frequenz - transformierten (X) eines eventuell ergänzten Eingangssignals (S1) anwendet, wobei ein zweitens Faltungsmodul (M3) eine Faltung mit einer zweiten Funktion mit der Form

$$U(k)=\sin c\left(\frac{k-k_0}{2}\right)\cdot e^{-j\pi\left(\frac{\alpha(k-k_0)}{2}\right)}\cdot P(k)$$

auf der Frequenzantwort (H) eines Filters (H), die eventuell ergänzt ist, anwender, wobei die Anusgangsvektoren (X', S3) dieser zwei Module (M2, M3, $M''_3$) eine gleiche Anzahl von Koeffizienten haben, und dass die Vorrichtung am Ausgang ein Modul (M4) aufweist, das die Koeffizienten dieser zwei Aus - gangsvektoren (X', S3) multiplizieren kann.

**11.** Vorrichtung nach einem der vorhergehenden Ansprüche, kombiniert mit einem der Absprüche 3 bis 5, **dadurch gekennzeichnet, dass** das Modul (M2, M3, $M''_3$) zur Faltung mit U einen Ausgangsvektor (H', S3) mit der gleichen Länge liefert wie der ergänzte Vektor Z, indem in dem Ausgangsvektor (H', S3) die Koeffizienten des Vektors Z behalten werden, die vor dem Einfügen gegenwärtig waren, und wobei die anderen Koeffizienten des Ausgangsvektors (H', S3) durch Faltung von Z und U erzielt werden.

**12.** Vorrichtung nach einem der vorhergehenden Ansprüche, **dadurch gekennzeichnet, dass** das Modul (M2, M3, $M''_3$) zur Faltung mit U am Ausgang einen Vektor B(0, ..., N-1) liefert, der derart ist, dass ungeachtet von k ein Koeffizient mit Index k von B gleich einem Faltungsprodukt zwischen Z und U ist, das derart ist, dass der Koeffizient mit Index k von Z in diesem Faltungsprodukt mit dem Koeffizienten mit Index $k_0$ von U, für den die Funktion sin c als Argument 0 hat, multipliziert ist.

**13.** Vorrichtung nach einem der vorhergehenden Ansprüche, **dadurch gekennzeichnet, dass** das Filter U Werte nicht gleich null auf einem Intervall von Werten von k annimmt, das in Bezug zu dem Wert $k_0$, für den U sein Modulmaximum erreicht, symmetrisch list.

**14.** Vorrichtung nach einem der vorhergehenden Ansprüche, **dadurch gekennzeichnet, dass** die Funktion U eine ungerade Anzahl Koeffizienten Lu aufweiset, und dass U wie folgt geschrieben werden kann :

$$U(k)=\sin c\left(-\frac{Lu-1}{4}+\frac{k}{2}\right)\cdot e^{-j\alpha\pi\left(-\frac{Lu-1}{4}+\frac{k}{2}\right)}\cdot P(k)\ .$$

**15.** Vorrichtung nach einem der vorhergehenden Ansprüche kombiniert mit einem der Ansprüche 9 oder 10, **dadurch gekennzeichnet, dass** die Transformierte eine diskrete Fourier-Transformierte ist.

**16.** Vorrichtung nach einem der vorhergehenden Ansprüche, **dadurch** gekennzeichet, dass das Gewichtungsfenster ein Kaiser-Fenster mit Koeffizient 1,5 ist.

17. Vorrichtung nach einem der vorhergehenden Ansprüche, **dadurch gekennzeichnet, dass** sie eine Echosperre bildet.

18. Vorrichtung nach einem der vorhergehenden Ansprüche, **dadurch gekennzeichnet, dass** sie einen Rauschunterdrücker bildet.

19. Vorrichtung nach einem der vorhergehenden Ansprüche, **dadurch gekennzeichnet, dass** $\alpha$ 1 ist.

20. Vorrichtung nach einem der vorhergehenden Ansprüche, **dadurch gekennzeichnet, dass** $\alpha$ = -1 ist.

21. Vorrichtung nach einem der vorhergehenden Ansprüche, **dadurch gekennzeichnet, dass** sie einen Lautsprecher (100), ein Mikrofon (200) ,eine Echosperre (420, 430, 440, 450) und einen Störungsunterdrücker (500) aufweist, wobei die Echosperre ein Adaptivfilter (470) und ein Subtrahiermodul (300) aufweist, das den Fehler (Y') zwischen einem Signal, das von dem Mikrofon (200) kommt , und ei - nem Signal, das durch Anwenden des Adaptivfilters (460) auf ein Signal des Lautsprechers (100) erzielt wird, liefert, wobei das Adaptivfilter (460) seine Koeffizienten in Abhängigkeit von diesem Fehler anpasst, und wobei die Vorrichtung Mittel (495) aufweist, die das Mikrofonsignal in dem Frequenzbereich stromaufwärts des Subtrahiermoduls (300) derart anpassen können, dass die Subtraktion in dem Frequenzbereich erfolgt.

22. vorrichtung nach dem vorhergehenden Anspruch, **dadurch gekennzeichnet, dass** sie Mittel (430, 440) aufweist, um das Ergebnis dieser Frequenzsubtraktion zum Adaptivfilter (470) der Echosperre zu übertragen.

23. Vorrichtung nach Anspruch 21, **dadurch gekennzeichnet, dass** der Störungsunterdrücker (500) stromabwärts des Subtrahiermoduls (300) angeordnet ist und in dem Frequenzbereich auf das Ergebnis der Subtraktion angewandt wird.

24. Vorrichtung nach dem vorergehenden Anspruch, **dadurch gekennzeichnet, dass** der Störungsunter - drücker (500) ein Adaptivfilter (520) aufweist, das seine Koeffizienten in Abhängigkeit von einem Frequenzeingangssignal (Y') des Störungsunterdrückers (500) neu berechnen kann.

25. Vorrichtung nach dem vorhergehenden Anspruch, **dadurch gekennzeichnet, dass** der Störungsunterdrücker (500) ungeordnet ist, um als Frequenzeingangssignal des Störungsunterdrückers das Frequenzausgangssignal (Y') des Subtrahiermoduls (300) zu empfanden.

26. Vorrichtung nach einem der Ansprüche 24 oder 25, **dadurch gekennzeichnet, dass** der Störungsunterdrücker (500) eine Schleife bildet, die am Eingang das Frequenzausgangssignal (Y') des Subtrahiermoduls (300) empfängt und am Ausgang eine Multiplikation der angepassten Koeffizienten seines Adaptivfilters auf das Frequenzausgangssignal (Y') des Subtrahiermoduls (300) anwendet.

27. Vorrichtung nach einem der Ansprüche 24 bis 26, **dadurch gekennzeichnet, dass** das gleiche Frequenzsignal (Y') als Fehler verwendet wird, um das Adaptivfilter (470) der Echosperre anzupassen, und mit den Koeffizienten des Adaptivfilters (520) des Störungsunterdrückers (500) multipliziert wird.

28. Vorrichtung nach einem der Ansprüche 21 bis 27, **dadurch gekennzeichnet, dass** kein Transformiertenmodul wischen dem Subtrahiermodul (300) und dem Störungsunterdrücker (500) platziert ist.

|H| dB
FIG. 1
f
φ(H)
FIG. 2
f
FIG. 3
t
dB
FIG. 4
f
φ
x 10⁴
FIG. 5
f
FIG. 6
t

FIG.7
dB
40
20
0
-20
-40
-60
0
0.1
0.2
0.3
0.4
0.5
0.6
0.7
0.8
0.9
f
FIG.8
x 10⁴
0
-0.5
-1
-1.5
-2
-2.5
-3
-3.5
f
FIG.9
t
200
400
600
800
1000
1200
FIG.10
FIG.11
φ
4000
3000
2000
1000
0
-1000
FIG.12

FIG.13

dB
25
20
15
10
5
0
0.02
0.022
0.024
0.026
0.028
0.03
0.032
0.034
0.036
0.038
f

FIG.14

0.8
0.6
0.4
0.2
0
-0.2
-0.4
-0.6
-0.8
-1
0
500
1000
1500
2000
t

FIG. 15
0.8
0.6
0.4
0.2
0
−0.2
−0.4
−0.6
−0.8
−1
0
500
1000
1500
2000
t
FIG. 16
0.8
0.6
0.4
0.2
0
−0.2
−0.4
−0.6
−0.8
−1
0
500
1000
1500
2000
t

FIG. 17

M1
S1 (0,...,N-1)
FFT N
X(0,...,N-1)
H'(0,...,N-1)
H
H(0,...,N-1)
M3

FIG. 18

M1
S1 (0,...,2N-1)
FFT2N
X(0,...,2N-1)
M5
2
X'(0,...,N-1)
H'(0,...,2N-1)
M'3
M"3
H
H(0,...,N-1)
M3

FIG.19
S1
N
TFR N
M1
X(0,...,N-1)
M2
2N
X'(0,...,2N-1)
M4
M3
H
H(0,...,N-1)
2N
S3

FIG.20
M1
N
0...0
S1
TFR2N
X(0,...,2N-1)
M4
M3
H
H(0,...,2N-1)
H'(0,...,2N-1)

FIG.21
M1
N
S1
TFR N
X(0,...,N-1)
D
X'
N/D
H
N/D
M3
M'3
M"3
M4
H'(0,...,N-1)

Parole reçue
HP
Erreur
FA
chemin
d'écho
Parole émise
−
+
MIC

FIG.22

FIG.23

Signal reçu

passage de la cadence échantillon à la cadence bloc

HP

Opération de conjugaison

$TFR_T$

*

$TFRI_T$

0..0

$TFR_T$

Δ

Contrainte C2

C2

−

$TFR_T$

MIC

matrice de normalisation

$TFRI_T$

$TFR_T$

0..0

Contrainte C1

C1

Passage de la cadence bloc à la cadence échantillon

Signal transmis

FIG.25
100
x(t)
HP
50
400
420
410
TFR_T
écho
TFRI_T
0..0
TFR_T
480
462
465
-c2-
468
470
bruit
495
200
450
460
300
TFR_T
MIC
Y'
signal utile
TFR_T
0..0
TFRI_T
440
438
435
-c1-
432
430
Y'
520
500
TFRI_T
0..0
TFR_T
600
532
536
-c3-
538
Z'
530
TFRI_T
700
800

Signal reçu
Passage de la cadence échantillon à la cadence bloc
HP
Opération de conjugaison
TFR$_T$
Lissage fréquentiel
Matrice de normalisation
TFR$_T$
MIC
Lissage fréquentiel
TFRI$_T$
Passage de la cadence bloc à la cadence échantillon
Signal transmis
100
x(t)
50
HP
400
420
410
TFR$_T$
écho
450
480
bruit
460
470
300
200
TFR$_T$
MIC
495
440
430
520
Y'
signal utile
500
600
Z'
530
TFRI$_T$
700
800

FIG.24

FIG.26

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 5526426 A
- US 4807173 A


### Littérature non-brevet citée dans la description


- **G.A. CLARK ; R. PARKER ; S.K. MITRA.** A Unified Approach to Time- and-Frequency-Domain Relaization of FIR adaptive Digital Filters. *IEEE Trransactions on Acoustics, Speech and Signal Processing,* Octobre 1983, vol. ASSP-31 (5
- **D. MANSOUR ; A.H. GRAY, JR.** Unconstrained Frequency-Domain Adaptive Filter. *IEEE Transactions on Acoustics, Speech and Signal Processing,* Octobre 1982, vol. ASSP-30 (5), 726-734
- **J. PRADO ; E. MOULINES.** Frequency-domain-adaptive filtering with applications to acoustic echo cancellation. *Annales des Télécommunications,* Juillet 1994, vol. 49 (7-8), 414-428
- **A.V. OPPENHEIM ; R.W. SCHAFER.** Digital Signal Processing. Prentice-Hall, 1975
- **V. TURBIN ; A. GILLOIRE ; P. SCALART.** Comparison of three post-filtering algorithms for residual acoustic echo reduction. *ICASSP'97, Munich,* vol. 1, 307-310
- **E. HÄNSLER.** The hands-free telephone problem : an annotated bibliography update. *Annales des Télécommunications,* 1994, vol. 49 (7-8), 360-367